(19) Europäisches Patentamt
European Patent Office
Office européen des brevets

(11) **EP 3 772 668 A1**

(12) **EUROPEAN PATENT APPLICATION**

(43) Date of publication:
**10.02.2021 Bulletin 2021/06**

(21) Application number: **20190105.5**

(22) Date of filing: **07.08.2020**

(51) Int Cl.:
**G02B 9/64** (2006.01)  **G02B 13/00** (2006.01)
**G02B 13/04** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2019 JP 2019145424**

(71) Applicant: **Nanchang O-Film Optical-Electronic Tech Co., Ltd**
**330013 Jiangxi (CN)**

(72) Inventor: **HOSHI, Koji**
**Jiangxi, 330013 (CN)**

(74) Representative: **Michalski Hüttermann & Partner Patentanwälte mbB**
**Speditionstraße 21**
**40221 Düsseldorf (DE)**

(54) **IMAGING LENS, IMAGING DEVICE AND INFORMATION TERMINAL**

(57) The present disclosure provides an imaging lens, an imaging device and an information terminal. The imaging lens includes a first lens group, a second lens group, and a third lens group, successively in order in this order from an object side to an image side. The first lens group has a positive composite refractive power. The second lens group has a positive composite refractive power. The third lens group has a negative composite refractive power. The following conditions (1) to (3) are satisfied:

$$(1)\ 0.51 < TTL/2ih < 0.85;$$

$$(2)\ 0.69 < ih/f < 1.03;$$

$$(3)\ 0.03 < (T7max-T70)/(T6max-T60) < 0.31.$$

FIG.1

EP 3 772 668 A1

**Description**

**TECHNICAL FIELD**

The present disclosure relates to an imaging lens, an imaging device, and an information terminal.

**BACKGROUND**

As portable information terminals, such as smartphones, become thinner and lighter, and pixels in image sensors mounted in the portable information terminals are increasing, there is a demand for miniaturization and large aperture for imaging lenses incorporated in such cameras.

For example, patent document 1 discloses a miniaturized imaging lens, which is composed of five lenses, has a brightness of F2.5 or less, and corresponds to a large field of view.

In addition, for example, patent document 2 discloses an imaging lens, which is composed of 6 lenses, and aims to achieve a large field of view while well correcting various aberrations to obtain high resolution.

Patent document 1: Japanese Patent Application Publication No. 2016-018001
Patent document 2: Japanese Patent Application Publication No. 2015-007748

However, regarding the large aperture of imaging lenses, the brightness low than F1.9, further low than F1.7 has been required. In the imaging lenses described in patent document 1, patent document 2, and the like, there are problems of insufficient high performance in aberrations and imaging performance in the case of larger aperture.

**SUMMARY**

Accordingly, it is necessary to provide an imaging lens to realize miniaturization and large aperture, and realize high performance in aberration and imaging performance.

The imaging lens includes a first lens group, a second lens group, and a third lens group, which are successively in order from an object side to an image side. The first lens group includes a first lens that is aspheric and has a positive refractive power on an optical axis, a second lens that is aspheric and a third lens that is aspheric, and the first lens group has a positive composite refractive power. The second lens group includes a fourth lens that is aspheric and a fifth lens that is aspheric, and the second lens group has a positive composite refractive power. The third lens group includes a sixth lens that is aspheric and has a negative refractive power on the optical axis and a seventh lens that is aspheric, and the third lens group has a negative composite refractive power. The imaging lens satisfies the following conditions (1) to (3):

$$(1)\ 0.51 < TTL/2ih < 0.85;$$

$$(2)\ 0.69 < ih/f < 1.03;$$

$$(3)\ 0.03 < (T7max-T70)/(T6max-T60) < 0.31,$$

wherein TTL is a distance from an object side surface of the first lens to an imaging surface along the optical axis;
ih is half of a diagonal length of an effective pixel area on the imaging surface;
f is an effective focal length of the imaging lens;
T60 is a center thickness of the sixth lens on the optical axis;
T6max is thickness of an optical effective portion of the sixth lens from a portion closest to the object side to a portion closest to the image side in a direction parallel to the optical axis;
T70 is a center thickness of the seventh lens on the optical axis; and
T7max is a thickness of an optical effective portion of the seventh lens from a portion closest to the object side to a portion closest to the image side in the direction parallel to the optical axis.

As used herein, "aspherical lens" means at least one of an object side surface and an image side surface is an aspherical surface. In addition, regarding each of the first lens group, the second lens group, and the third lens group, lenes in the respective lens group are arranged in that order from the object side to the image side.

According to the condition (1), a ratio of a total length to an image height is optimized. Half of the diagonal length (ih) of the effective pixel area on the imaging surface of the imaging lens of this system is relatively large, resulting in a large imaging surface that can adapt to a photosensitive chip with high pixels. When half of the diagonal length (ih) of the effective pixel area on the imaging surface of the imaging lens is constant, if the upper limit of this condition is satisfied, the total optical length of the system can be shorten, the lens can be miniaturized; if the lower limit of this condition is satisfied, the total length can be prevent from being excessively compressed to increase the difficulty of assembly.

According to the condition (2), a ratio of the effective focal length to the image height is optimized. When half of the diagonal length (ih) of the effective pixel area on the imaging surface of the imaging lens is constant, increasing the effective focal length can clearly image farther objects, shortening the effective focal length can expand the field of view and can image a wider object space.

According to the condition (3), a ratio of the thickness difference of the sixth lens to the thickness difference of the seventh lens is optimized, and the center thickness of the sixth lens and the seventh lens and the optical effective edge thickness are reasonably combined, which is beneficial to reduce the difficulty of molding of the lens, easier to manufacture, and is also beneficial to correct aberration.

Such an imaging lens can suppress the total optical length even when the aperture is large, and achieve high performance in aberrations and imaging performance.

The imaging lens may further satisfy the following condition (4):

$$(4)\ 0.03 < fG1/fG2 < 33.3,$$

wherein fG1 is an effective focal length of the first lens group;
fG2 is an effective focal length of the second lens group.

According to the condition (4), a ratio of the effective focal length of the first lens group to the effective focal length of the second group is optimized. Both of the first lens group and the second lens group have the positive refractive power. The effective focal length of the first lens group and the effective focal length of the second group are reasonably combined, such that the positive refractive power of the optical system is in a balanced distribution, and thus the performance of the optical system is stable, which is beneficial to correct aberrations.

The imaging lens may further satisfy the following condition (5):

$$(5)\ -0.11 < fG3/fL7 < 0.95,$$

wherein, fG3 is an effective focal length of the third lens group;
fL7 is an effective focal length of the seventh lens.

According to the condition (5), a ratio of the effective focal length of the third lens group to the effective focal length of the seventh lens is optimized. The effective focal length of the third lens group and the effective focal length of the seventh lens are reasonably combined, such that the seventh lens maintains a reasonable refractive power in the third lens group, which is beneficial to adapt to the photosensitive chip more flexibly.

The imaging lens may further satisfy the following condition (6):

$$(6)\ -0.11 < (DB2\_3 - DL6\_7)/ih < 0.34,$$

wherein DB2_3 is a distance between the second lens group and the third lens group on the optical axis;
DL6_7 is a distance between the sixth lens and the seventh lens on the optical axis.

According to the condition (6), a ratio of the distance between the sixth lens and the seventh lens to the distance between the second lens group and the third lens group on the optical axis is optimized. When half of the diagonal length (ih) of the effective pixel area on the imaging surface of the imaging lens is constant, such two distances are reasonably combined to make the spacing between the lenses not too large, thereby reducing the total length of the system, which is beneficial to miniaturization; and to make the spacing between the lenses not too small, thereby increasing the tolerance sensitivity, which is beneficial to assembly.

In the imaging lens, the second lens may have a negative refractive power on the optical axis, or the second lens has a positive refractive power on the optical axis, while the third lens has a negative refractive power on the optical axis. The second lens with the negative refractive power generates positive spherical aberration and positive chromatic aberration, which can correct the negative spherical aberration and negative chromatic aberration generated by the first lens with a positive refractive power. The second lens with the positive refractive power and the third lens with the negative refractive power will cancel out each other's opposite aberrations, thereby correcting aberrations.

In addition, in the imaging lens, distances between the lenses in the third lens group may be changed during focusing. In particular, if lenses other than the seventh lens are configured to move integrally, the configuration for focusing is simplified, and the moving distance of the lenses due to focusing is shortened. In addition, the change in distances between the lenses in the third lens group changes the focal point of the optical system, so as to achieve the purpose of focusing, which can make the image clearer.

In addition, in the imaging lens, the seventh lens may function as an infrared cut filter due to the material thereof. One of the object side surface and the image side surface of the seventh lens is a surface with minimum curvature in all lens surfaces. An infrared cut layer is disposed on the surface with minimum curvature, such that the seventh lens functions as an infrared cut filter. In addition, the curvature of the surface with minimum curvature is not limited to be a single minimum one, but also includes a case of having the same minimum ones. The seventh lens can prevent transmission of light in the infrared band, ensure that the light taking part in imaging is visible light, and prevent image color shift. The surface with minimum curvature bends greatly at the paraxial position, which can better deflect the light. Cutting off the infrared band ensures that the light taking part in the imaging is visible light, and prevent image color shift.

In case that the seventh lens functions as an infrared cut filter due to the infrared cut layer, it is excellent in terms of ease of manufacture, freedom of selection of the infrared cut layer, and the like.

In addition, in the imaging lens, the seventh lens may be a composite lens formed by a substrate portion made of glass and an aspheric lens portion made of resin.

If the seventh lens is such a composite lens, the substrate portion and the aspheric lens portion can share the function of maintaining the strength of the lens, the function as a filter etc., and the function of the correction optical system that achieves high performance in aberration and imaging performance.

An imaging device includes any of the aforementioned imaging lenses and an imaging element that converts an optical image imaged by the imaging lens into an electrical signal. Such an imaging device, even when the aperture of the imaging lens is large, the total optical length is suppressed, and high performance in aberrations and imaging performance is achieved, so as to realize lightness, thinness and high pixels. In addition, the imaging device has features of large field of view, miniaturization, large imaging surface, high pixels, and easy molding, and a case that aberrations can be well corrected.

An information terminal includes the aforementioned imaging device, and a processing element configured to process the electrical signal obtained by the imaging device. Such an information terminal achieves lightness, thinness and high pixels.

According to the imaging lens and the imaging device of the present disclosure, it is possible to realize not only miniaturization and large aperture, but also high performance in aberration and imaging performance.

**BRIEF DESCRIPTION OF THE DRAWINGS**

FIG. 1 is a schematic view of an imaging lens according to a first embodiment.
FIG. 2 is an aberration diagram at infinity focus according to a Numerical Example 1.
FIG. 3 is a schematic view of an imaging lens according to a second embodiment.
FIG. 4 is an aberration diagram at infinity focus according to a Numerical Example 2.
FIG. 5 is a schematic view of an imaging lens according to a third embodiment.
FIG. 6 is an aberration diagram at infinity focus according to a Numerical Example 3.
FIG. 7 is a schematic view of an imaging lens according to a fourth embodiment.
FIG. 8 is an aberration diagram at infinity focus according to a Numerical Example 4.
FIG. 9 is a schematic view of an imaging lens according to a fifth embodiment.
FIG. 10 is an aberration diagram at infinity focus according to a Numerical Example 5.
FIG. 11 is a schematic view of an imaging lens according to a sixth embodiment.
FIG. 12 is an aberration diagram at infinity focus according to a Numerical Example 6.
FIG. 13 is a schematic view of an imaging lens according to a seventh embodiment.
FIG. 14 is an aberration diagram at infinity focus according to a Numerical Example 7.
FIG. 15 is a schematic view of an imaging lens according to an eighth embodiment.
FIG. 16 is an aberration diagram at infinity focus according to a Numerical Example 8.

FIG. 17 is a block diagram of an information terminal according to an embodiment.

## DETAILED DESCRIPTION OF THE EMBODIMENTS

Hereinafter, embodiments of the present disclosure will be described.

An imaging lens of an embodiment includes a first lens group, a second lens group, and a third lens group, which are successively arranged in order from an object side to an image side. The first lens group includes a first lens that is aspheric and has a positive refractive power on an optical axis, a second lens that is aspheric, and a third lens that is aspheric. The first lens group has a positive a composite refractive power. The second lens group includes a fourth lens that is aspheric and a fifth lens that is aspheric. The second lens group has a positive composite refractive power. The third lens group includes a sixth lens that is aspheric and having a negative refractive power on the optical axis, and a seventh lens that is aspheric. The third lens group has a negative composite refractive power.

That is, the imaging lens of the present embodiment has seven lenses, in which at least the first lens has a positive refractive power and at least the sixth lens has a negative refractive power.

In addition, the imaging lens of the present embodiment satisfies the following conditions (1) to (3).

$$(1)\ 0.51 < \text{TTL}/2\text{ih} < 0.85;$$

$$(2)\ 0.69 < \text{ih}/\text{f} < 1.03;$$

$$(3)\ 0.03 < (\text{T7max-T70})/(\text{T6max-T60}) < 0.31;$$

where TTL is a distance from an object side surface of the first lens to an imaging surface along the optical axis;
ih is half of a diagonal length of an effective pixel area on the imaging surface;
f is an effective focal length of the imaging lens;
T60 is a center thickness of the sixth lens on the optical axis;
T6max is thickness of an optical effective portion of the sixth lens from a portion closest to the object side to a portion closest to the image side in a direction parallel to the optical axis;
T70 is a center thickness of the seventh lens on the optical axis; and
T7max is a thickness of an optical effective portion of the seventh lens from a portion closest to the object side to a portion closest to the image side in the direction parallel to the optical axis.

The condition (1) relates to a total length with respect to an image height. If the total length is lower than the lower limit, it is difficult to achieve good aberration correction with a large aperture, which is an object of the present disclosure. In the condition (1), the lower limit may be 0.57, more specifically 0.64. If the total length exceeds the upper limit in the condition (1), the miniaturization that is an object of the present disclosure cannot be achieved. In the condition (1), the upper limit may be 0.79 to achieve further miniaturization, and the upper limit may more specifically be 0.74.

The condition (2) relates to the effective focal length and the image height. If the ratio in the condition (2) is lower than the lower limit, the image height will become smaller with respect to the effective focal length, and a large field of view that is an object of the present disclosure cannot be achieved. In the condition (2), the lower limit may be 0.74, more specifically 0.79, such that a further large field of view can be realized. If the upper limit in the condition (2) is exceeded, the field of view will become too large, and high performance achieved by performing aberration correction well, which is an object of the present disclosure, cannot be achieved. In the condition (2), the upper limit may be 0.96, more specifically 0.89.

The condition (3) relates to a thickness difference of the sixth lens and a thickness difference of the seventh lens. If the thickness difference of the seventh lens is lower than the lower limit, an aberration correction effect of the seventh lens will become small, and it is difficult for the entire lens to correct curvature of field and distortion well. In the condition (3), if the thickness difference of the sixth lens exceeds the upper limit, an aberration correction effect of the sixth lens will become small, and it is difficult for the entire lens to correct curvature of field and distortion well. In the condition (3), the upper limit may be 0.21.

The imaging lens can further satisfy the following condition (4):

$$(4)\ 0.03 < \text{fG1}/\text{fG2} < 33.3;$$

where fG1 is an effective focal length of the first lens group;
fG2 is an effective focal length of the second lens group.

The condition (4) relates to a ratio of an effective focal length of the first lens group to an effective focal length of the second lens group. If it is lower than the lower limit, the positive refractive power of the second lens group will be weakened, and thus the second lens group can no longer share the positive refractive power with the first lens group to correct spherical aberration and coma aberration. In the condition (4), the lower limit may be 0.09, more specifically 0.27. If the upper limit in the condition (4) is exceeded, the positive refractive power of the first lens group will be weakened, and thus the first lens group can no longer share the positive refractive power with the second lens group to correct spherical aberration and coma aberration. In the condition (4), the upper limit may be 11.1, more specifically 3.7.

The imaging lens may further satisfy the following condition (5):

$$(5)\ {-0.11} < fG3/fL7 < 0.95;$$

where fG3 is an effective focal length of the third lens group;
fL7 is an effective focal length of the seventh lens.

The condition (5) relates to a ratio of the effective focal length of the third lens group to the effective focal length of the seventh lens. If it is lower than the lower limit, the seventh lens will become a lens with a strong positive refractive power, and it is difficult to shorten the total length. In the condition (5), the lower limit may be 0.00, the positive refractive power of the seventh lens disappears, which is beneficial to shorten the total length. In the condition (5), if the lower limit is 0.08, the seventh lens will have a negative refractive power, which is beneficial to shorten the overall length. If the upper limit in the condition (5) is exceeded, the negative refractive power of the seventh lens will become stronger. If the seventh lens is not thick enough, the seventh lens cannot be configured. Therefore, it is difficult to shorten the total length, and aberration variation resulting from the changing in the air spacing distance in front of the seventh lens increases, which are undesirable. In the condition (5), the upper limit may be 0.73, more specifically 0.56.

The imaging lens may further satisfy the following condition (6):

$$(6)\ {-0.11} < (DB2\_3{-}DL6\_7)/ih < 0.34;$$

where DB2_3 is a distance between the second lens group and the third lens group on the optical axis;
DL6_7 is a distance between the sixth lens and the seventh lens on the optical axis.

The condition (6) relates to the distance between the second lens group and the third lens group and the distance between the sixth lens and the seventh lens. If it is lower than the lower limit, the distance between the second lens group with a positive refractive power and the third lens group with a negative refractive power will become smaller, and thus it is difficult to shorten the total length. In the condition (6), if the lower limit is -0.06, more specifically -0.01, it is beneficial to shorten the total length. In the condition (6), if the upper limit is exceeded, the distance between the second lens group and the third lens group will become too large, making it difficult to shorten the total length. In the condition (6), the upper limit may be 0.27.

In an imaging lens according to one embodiment of the present disclosure, the refractive power on the optical axis of the second lens may be negative, or the refractive power on the optical axis of the second lens may be positive and the refractive power on the optical axis of the third lens is negative.

In addition, in an imaging lens according to one embodiment of the present disclosure, the distances between the lenses in the third lens group may be changed during focusing. In particular, if lenses other than the seventh lens are configured to move integrally, the configuration for focusing is simplified, and the moving distance of the lenses due to focusing is shortened.

In addition, in an imaging lens according to one embodiment of the present disclosure, the seventh lens functions as an infrared cut filter.

In a conventional imaging device, an infrared cut filter is provided between an imaging lens and an imaging surface. Therefore, in a conventional imaging lens, a long back focal length is required, which impedes the miniaturization of the imaging lens. In contrast, in the present imaging lens with the seventh lens functioning as an infrared cut filter, a design with a short back focal length can be adopted, which can achieve miniaturization.

When the seventh lens functions as the infrared cut filter, the seventh lens may function as an infrared cut filter due to the material thereof, or an infrared cut layer is disposed on a minimum curvature surface having smaller curvature than that of any other lens surfaces.

When the seventh lens functions as the infrared cut filter due to the material thereof, the uniformity of the infrared cut effect in a direction perpendicular to the optical axis is high. In addition, when the seventh lens functions as the infrared cut filter due to the infrared cut layer, it is excellent in terms of ease of manufacture, freedom of selection of the infrared cut layer, and the like.

In addition, in an imaging lens according to one embodiment of the present disclosure, the seventh lens is a composite lens formed by a substrate portion made of glass and an aspheric lens portion made of resin. If the seventh lens is such a composite lens, the substrate portion and the aspheric lens portion can share the function of maintaining the strength of the lens, the function as a filter etc., and the function of the correction optical system that achieves high performance in aberration and imaging performance.

The infrared cut filter may have the following light transmission characteristics: the transmittance is half (50%) at any wavelength in a wavelength range of 380nm to 430nm, and the transmittance is 80% or more in a wavelength range of 500nm to 600nm, and the transmittance is 10% or less in a wavelength range of 730nm to 800nm.

Specifically, the aforementioned infrared cut filter is constituted by a multilayer film formed by blue glass, a multilayer film formed by ink, a multilayer film formed by vacuum vapor deposition or the like or a combination thereof.

Hereinafter, referring to figures and tables, Numerical Example in which specific numerical values are applied to specific embodiments of the imaging lens of the present disclosure will be illustrated.

In addition, the meanings and the like of symbols shown in the following tables and descriptions are as follows.

"Sn" indicates serial numbers of each lens surface and aperture surface that constitute the imaging lens, which are arranged in order from the object side to the image side. "R" indicates the radius of curvature of each surface. "D" indicates surface spacing (the center thickness of the lens or air spacing) between each surface and the next surface in the optical axis. "nd" indicates the refractive power of the lens and the like to the d-line ($\lambda$=587.6nm). "vd" indicates the Abbe number of the lens and the like to the d-line. Regarding the "radius of curvature R", "INFINITY", which indicates that the surface is a flat surface. Regarding "optical elements", "L1R1", "L1R2", "L2R1", "L2R2", ..., which respectively indicate a first surface of the first lens, a second surface of the first lens, a first surface of the second lens, a second surface of the second lens...

"K" indicates a conic constant. "A3", "A4", "A5", ..., "A18" indicate a $3^{rd}$, $4^{th}$, $5^{th}$, ..., $18^{th}$ order aspheric coefficients, respectively.

In addition, in each of the following tables showing the conic constant and the aspheric coefficients, the numerical value is expressed using an exponent with a base of 10. For example, "0.12E-05" indicates "0.12x $10^{-5}$", "9.87E+03" indicates "9.87$\times 10^{3}$".

The imaging lens used in each embodiment includes a lens whose lens surface is formed as an aspheric surface. The distance in a direction parallel to the optical axis with a center point (lens vertex) of the lens surface as the origin is set to "z". The distance in a direction perpendicular to the optical axis is set to "r". In addition, if the paraxial curvature at an apex of the lens is set to "c", the conic constant is set to "k", and the $3^{rd}$, $4^{th}$, $5^{th}$, ..., $18^{th}$ order aspheric coefficients are respectively set to "A3", "A4", "A5", ..., "A18", the aspherical shape is defined by the following mathematical condition 1.

[Mathematical condition 1]

$$z= \frac{cr^2}{1+SQRT\{1-(1+k)c^2r^2\}} +A3r^3+A4r^4+A5r^5\cdots\cdots+A18r^{18}$$

<first embodiment>

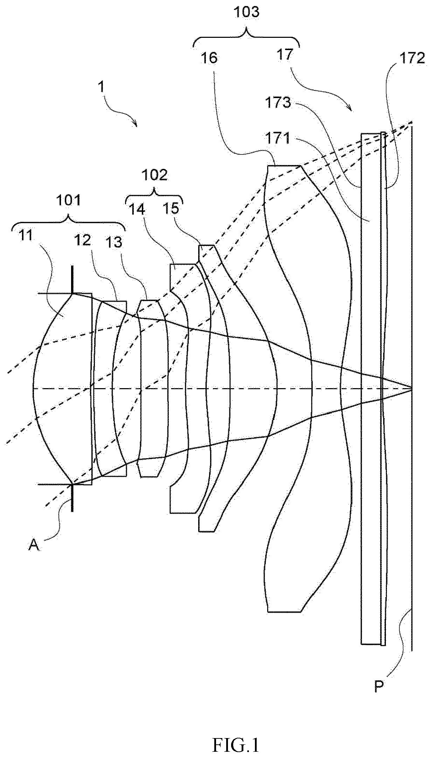

FIG. 1 is a schematic view of an imaging lens 1 according to a first embodiment.

The imaging lens 1 according to the first embodiment includes: a first lens 11 with a positive refractive power, a second lens 12 with a negative refractive power, a third lens 13 with a positive refractive power, a fourth lens 14 with a negative refractive power, a fifth lens 15 with a positive refractive power, a sixth lens 16 with a negative refractive power at a center of the lens and an inflection point at a position away from the optical axis, and a seventh lens 17 with a negative refractive power at a center of the lens and an inflection point at a position away from the optical axis, which are successively arranged in order from an object side to an image side. In the description of each embodiment below, an object side surface (left side of the figure) of each lens is referred to as the "front surface", and an image side surface (right side of the figure) of each lens is referred to as the "rear surface".

The first lens 11 to the third lens 13 constitute a first lens group 101. The fourth lens 14 and the fifth lens 15 constitute a second lens group 102. The sixth lens 16 and the seventh lens 17 constitute a third lens group 103.

An aperture A with a fixed opening is provided on the object side of the first lens 11. An imaging surface P of an imaging element (image sensor) is provided on an imaging surface of the imaging lens 1.

The seventh lens 17 according to the first embodiment is a composite lens formed by a substrate portion 171 made of glass and a lens portion 172 made of resin. The lens portion 172 may be located on the image side with respect to the substrate portion 171. An infrared cut layer 173 for reducing infrared rays may be formed on a front surface of the substrate portion 171. Specifically, the infrared cut layer 173 may be an infrared cut film formed by vacuum evaporation, or an infrared-absorbing ink layer formed by spin coating.

Table 1 shows lens data of a Numerical Example 1 in which specific numerical values are applied to the imaging lens 1 according to the first embodiment.

[Table 1]

| optical element | Sn | R(mm) | D(mm) | nd | vd |
|---|---|---|---|---|---|
| aperture | 1 | INFINITY | -0.582 | | |
| L1R1 | 2 | 1.889 | 0.865 | 1.54391 | 55.9 |
| L1R2 | 3 | 10.745 | 0.045 | | |
| L2R1 | 4 | 9.936 | 0.280 | 1.67137 | 19.3 |
| L2R2 | 5 | 3.998 | 0.433 | | |
| L3R1 | 6 | 20.000 | 0.399 | 1.66071 | 20.4 |
| L3R2 | 7 | 24.947 | 0.269 | | |
| L4R1 | 8 | 3.913 | 0.310 | 1.67137 | 19.3 |
| L4R2 | 9 | 3.546 | 0.364 | | |
| L5R1 | 10 | -10.510 | 0.705 | 1.54391 | 55.9 |
| L5R2 | 11 | -1.854 | 0.522 | | |
| L6R1 | 12 | -14.849 | 0.430 | 1.54391 | 55.9 |
| L6R2 | 13 | 2.484 | 0.311 | | |
| L7R1 | 14 | INFINITY | 0.300 | 1.51680 | 64.2 |
| L7R2 | 15 | INFINITY | 0.025 | 1.51788 | 54.3 |
| L7R3 | 16 | 5.829 | 0.443 | | |

In the imaging lens 1, among the fifteen lens surfaces (from the second surface to the 16th surface) of the first lens 11 to the lens portion 172 of the seventh lens 17, all surfaces other than two surfaces of the substrate portion 171 (a 14th surface and a 15th surface) are aspherical surfaces.

In Table 2 and Table 3, aspheric coefficients of the aspheric surfaces in the Numerical Example 1 is shown together with the conic constant k.

[Table 2]

| Sn | K | A3 | A4 | A5 | A6 | A7 | A8 |
|---|---|---|---|---|---|---|---|
| 2 | 0.0000E+00 | | -5.5468E-03 | | 2.3054E-02 | | -5.7595E-02 |
| 3 | 0.0000E+00 | | -6.2989E-02 | | 6.6594E-02 | | -2.2587E-02 |
| 4 | 0.0000E+00 | | -62540E-02 | | 7.3688E-02 | | 2.1314E-02 |
| 5 | 0.0000E+00 | | -9.8221 E-03 | | 5.2186E-02 | | -7.8637E-02 |
| 6 | 0.0000E+00 | | -4.2881E-02 | | 2.8484E-02 | | -9.7789E-02 |
| 7 | 0.0000E+00 | | -7.0220E-02 | | 7.2742E-02 | | -1.5362E-01 |
| 8 | 0.0000E+00 | | -1.1967E-01 | | 2.9158E-02 | | 1.5004E-03 |
| 9 | 0.0000E+00 | | -9.1984E-02 | | 9.3874E-03 | | 2.0007E-02 |

(continued)

| Sn | K | A3 | A4 | A5 | A6 | A7 | A8 |
|---|---|---|---|---|---|---|---|
| 10 | 6.6204E+00 | | -1.4296E-02 | | -2.3514E-02 | | 2.0747E-02 |
| 11 | -3.2303E+00 | | -2.0935E-02 | | -1.4528E-02 | | 2.2088E-02 |
| 12 | 7.7815E+00 | -7.6137E-03 | -8.6795E-02 | -2.7853E-02 | 8.0846E-02 | -3.5478E-02 | 3.7643E-03 |
| 13 | -5.3872E+00 | 2.3293E-02 | -1.1457E-01 | -2.9730E-02 | 1.7633E-01 | -1.6858E-01 | 8.4630E-02 |
| 16 | -4.4578E+01 | -2.2413E-02 | -7.5156E-03 | 1.1216E-02 | -5.4785E-03 | 2.7704E-03 | -1.3315E-03 |

[Table 3]

| Sn | A9 | A10 | A11 | A12 | A14 | A16 | A18 |
|---|---|---|---|---|---|---|---|
| 2 | | 8.4358E-02 | | -7.8090E-02 | 4.3647E-02 | -1.3632E-02 | 1.7705E-03 |
| 3 | | -3.0246E-02 | | 4.2834E-02 | -2.6961 E-02 | 9.2725E-03 | -1.3541 E-03 |
| 4 | | -1.3555E-01 | | 1.7016E-01 | -1.1146E-01 | 3.9593E-02 | -5.7994E-03 |
| 5 | | 1.8868E-01 | | -3.3730E-01 | 3.6044E-01 | -2.0327E-01 | 4.7575E-02 |
| 6 | | 1.6705E-01 | | -2.1015E-01 | 1.6775E-01 | -8.0188E-02 | 1.7618E-02 |
| 7 | | 2.2978E-01 | | -2.5422E-01 | 1.7690E-01 | -6.9070E-02 | 1.1602E-02 |
| 8 | | -4.4406E-03 | | -1.1029E-02 | 1.2945E-02 | -5.8249E-03 | 9.3109E-04 |
| 9 | | -2.3603E-02 | | 1.3524E-02 | -4.5400E-03 | 8.4267E-04 | -6.6208E-05 |
| 10 | | -1.9456E-02 | | 1.1366E-02 | -3.3808E-03 | 5.0192E-04 | -3.0769E-05 |
| 11 | | -1.8582E-02 | | 8.8076E-03 | -2.1730E-03 | 2.6556E-04 | -1.2870E-05 |
| 12 | 1.8021 E-03 | -8.3234E-04 | 1.5504E-04 | -1.1653E-05 | | | |
| 13 | -2.5223E-02 | 4.3667E-03 | -3.8523E-04 | 1.1834E-05 | | | |
| 16 | 4.3413E-04 | -9.1107E-05 | 1.1831E-05 | -7.2412E-07 | | | |

Table 4 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 101 to the third lens group 103, an effective focal length f7 of the seventh lens 17, a distance D2_3 between the second lens group 102 and the third lens group 103, a distance DL6_7 between the sixth lens 16 and the seventh lens 17, central thicknesses T60 and T70 of the sixth lens 16 and the seventh lens 17 on the optical axis, and thicknesses T6max and T7max from the frontmost point to the rearmost point in an optical effective portion of the imaging lens 1 according to the Numerical Example 1.

[Table 4]

| | |
|---|---|
| f(mm) | 4.739 |
| F-number | 1.66 |
| total field of view (°) | 79.4 |
| ih (mm) | 4.000 |
| TTL (mm) | 5.701 |
| fG1(mm) | 5.657 |
| fG2(mm) | 4.319 |
| fG3(mm) | -2.784 |
| fL7(mm) | -11.293 |

(continued)

| | |
|---|---|
| DB2_3(=D11)(mm) | 0.522 |
| DL6_7(=D13)(mm) | 0.311 |
| T60(=D12)(mm) | 0.430 |
| T6max(mm) | 1.308 |
| T70(=D14+D15)(mm) | 0.325 |
| T7max(mm) | 0.395 |

It can be seen from Table 4 that, in the Numerical Example 1, TTL/2ih=0.71, thus the condition (1) is satisfied. In addition, ih/f=0.84, thus the condition (2) is satisfied. In addition, fG1/fG2=1.31, thus the condition (3) is satisfied. In addition, fG3/fL7=0.25, thus the condition (4) is satisfied. In addition, (DB2_3-DL6_7)/ih=0.05, thus the condition (5) is satisfied. In addition, (T7max-T70)/(T6max-T60)=0.08, thus the condition (6) is satisfied.

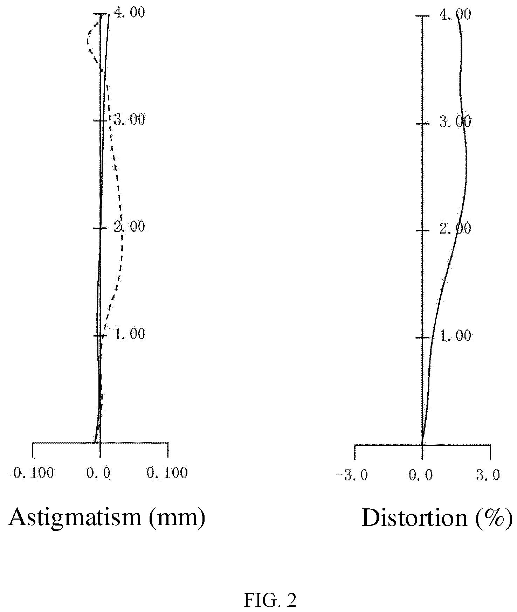

FIG. 2 is an aberration diagram at infinity focus according to the Numerical Example 1.

An astigmatism diagram and a distortion diagram are shown in FIG. 2.

In the astigmatism diagram, values in a sagittal image plane are indicated with a solid line, and values in a meridional image plane are indicated with a broken line.

It can be seen from the aberration diagram that, in the Numerical Example 1, various aberrations are well corrected, and the imaging performance is excellent.

<Second embodiment>

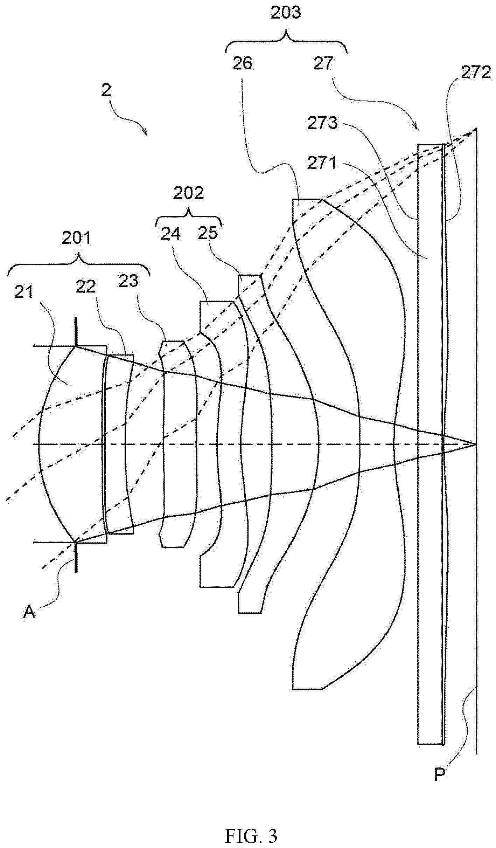

FIG. 3 is a schematic view of an imaging lens 2 according to a second embodiment.

The imaging lens 2 according to the second embodiment includes: a first lens 21 with a positive refractive power, a second lens 22 with a negative refractive power, a third lens 23 with a positive refractive power, a fourth lens 24 with a negative refractive power, a fifth lens 25 with a positive refractive power, a sixth lens 26 with a negative refractive power at a center of the lens and an inflection point at a position away from the optical axis, and a seventh lens 27 with a negative refractive power at a center of the lens and an inflection point at a position away from the optical axis, which are successively arranged in order from an object side to an image side.

The first lens 21 to the third lens 23 constitute a first lens group 201. The fourth lens 24 and the fifth lens 25 constitute a second lens group 202. The sixth lens 26 and the seventh lens 27 constitute a third lens group 203.

An aperture A with a fixed opening is provided on the object side of the first lens 21. An imaging surface P of an imaging element (image sensor) is provided on an imaging surface of the imaging lens 2.

The seventh lens 27 according to the second embodiment is a composite lens formed by a substrate portion 271 made of glass and a lens portion 272 made of resin. The lens portion 272 may be located on the image side with respect to the substrate portion 271. An infrared cut layer 273 for reducing infrared rays may be formed on a front surface of the substrate portion 271. Specifically, the infrared cut layer 273 may be an infrared cut film formed by vacuum evaporation, or an infrared-absorbing ink layer formed by spin coating.

Table 5 shows lens data of a Numerical Example 2 in which specific numerical values are applied to the imaging lens 2 according to the second embodiment.

[Table 5]

| optical element | Sn | R(mm) | D(mm) | nd | vd |
|---|---|---|---|---|---|
| aperture | 1 | INFINITY | -0.440 | | |
| L1R1 | 2 | 1.894 | 0.800 | 1.54391 | 55.9 |
| L1R2 | 3 | 14.386 | 0.040 | | |
| L2R1 | 4 | 30.159 | 0.250 | 1.67137 | 19.3 |
| L2R2 | 5 | 5.194 | 0.492 | | |
| L3R1 | 6 | 9.402 | 0.415 | 1.66071 | 20.4 |
| L3R2 | 7 | 13.138 | 0.268 | | |
| L4R1 | 8 | 3.397 | 0.300 | 1.67137 | 19.3 |

(continued)

| optical element | Sn | R(mm) | D(mm) | nd | vd |
|---|---|---|---|---|---|
| L4R2 | 9 | 3.048 | 0.396 | | |
| L5R1 | 10 | -13.226 | 0.598 | 1.54391 | 55.9 |
| L5R2 | 11 | -2.104 | 0.520 | | |
| L6R1 | 12 | -10.357 | 0.428 | 1.54391 | 55.9 |
| L6R2 | 13 | 2.824 | 0.312 | | |
| L7R1 | 14 | INFINITY | 0.300 | 1.51680 | 64.2 |
| L7R2 | 15 | INFINITY | 0.025 | 1.51788 | 54.3 |
| L7R3 | 16 | 4.856 | 0.419 | | |

In the imaging lens 2, among the fifteen lens surfaces (from the second surface to the 16th surface) of the first lens 21 to the lens portion 272 of the seventh lens 27, all surfaces other than two surfaces of the substrate portion 271 (a 14th surface and a 15th surface) are aspherical surfaces.

In Table 6 and Table 7, aspheric coefficients of the aspheric surfaces in the Numerical Example 2 is shown together with the conic constant k.

[Table 6]

| Sn | K | A3 | A4 | A5 | A6 | A7 | A8 |
|---|---|---|---|---|---|---|---|
| 2 | 0.0000E+00 | | -4.4353E-03 | | 2.0312E-02 | | -5.3895E-02 |
| 3 | 0.0000E+00 | | -5.6141E-02 | | 7.1554E-02 | | -1.8931E-02 |
| 4 | 0.0000E+00 | | -5.9565E-02 | | 8.0905E-02 | | 1.8776E-02 |
| 5 | 0.0000E+00 | | -1.7790E-02 | | 5.0362E-02 | | -8.3627E-02 |
| 6 | 0.0000E+00 | | -4.7818E-02 | | 2.3796E-02 | | -9.3589E-02 |
| 7 | 0.0000E+00 | | -7.6646E-02 | | 6.9122E-02 | | -1.5486E-01 |
| 8 | 0.0000E+00 | | -1.2489E-01 | | 2.6114E-02 | | 1.3595E-03 |
| 9 | 0.0000E+00 | | -9.7639E-02 | | 1.1278E-02 | | 1.9204E-02 |
| 10 | 6.6204E+00 | | -1.4700E-02 | | -2.1474E-02 | | 1.9436E-02 |
| 11 | -3.2303E+00 | | -1.2440E-02 | | -1.3622E-02 | | 2.1683E-02 |
| 12 | 7.7815E+00 | -1.2233E-02 | -8.3805E-02 | -2.9122E-02 | 8.1342E-02 | -3.5451 E-02 | 3.7566E-03 |
| 13 | -5.3872E+00 | 3.4659E-02 | -1.1989E-01 | -3.1680E-02 | 1.7711E-01 | -1.6857E-01 | 8.4614E-02 |
| 16 | -5.2079E+01 | -3.9078E-02 | -1.3806E-03 | 1.1797E-02 | -5.7996E-03 | 2.7387E-03 | -1.3170E-03 |

[Table 7]

| Sn | A9 | A10 | A11 | A12 | A14 | A16 | A18 |
|---|---|---|---|---|---|---|---|
| 2 | | 8.2036E-02 | | -7.6867E-02 | 4.3366E-02 | -1.3708E-02 | 1.8982E-03 |
| 3 | | -3.0083E-02 | | 4.4024E-02 | -2.4885E-02 | 1.0716E-02 | -2.0927E-03 |
| 4 | | -1.3620E-01 | | 1.7149E-01 | -1.0912E-01 | 4.1135E-02 | -7.1174E-03 |
| 5 | | 1.8925E-01 | | -3.4012E-01 | 3.5970E-01 | -2.0020E-01 | 4.5451 E-02 |
| 6 | | 1.6282E-01 | | -2.1172E-01 | 1.6894E-01 | -7.8364E-02 | 1.5920E-02 |
| 7 | | 2.3075E-01 | | -2.5403E-01 | 1.7546E-01 | -6.8572E-02 | 1.1698E-02 |
| 8 | | -5.1857E-03 | | -1.0807E-02 | 1.3192E-02 | -6.4471 E-03 | 1.1103E-03 |

(continued)

| Sn | A9 | A10 | A11 | A12 | A14 | A16 | A18 |
|----|----|-----|-----|-----|-----|-----|-----|
| 9 | | -2.3664E-02 | | 1.3626E-02 | -4.5734E-03 | 8.4296E-04 | -6.5305E-05 |
| 10 | | -1.9372E-02 | | 1.1406E-02 | -3.3783E-03 | 5.0168E-04 | -3.1108E-05 |
| 11 | | -1.8540E-02 | | 8.8049E-03 | -2.1736E-03 | 2.6548E-04 | -1.2805E-05 |
| 12 | 1.7954E-03 | -8.3306E-04 | 1.5493E-04 | -1.1513E-05 | | | |
| 13 | -2.5239E-02 | 4.3638E-03 | -3.8462E-04 | 1.2076E-05 | | | |
| 16 | 4.3379E-04 | -9.1024E-05 | 1.1653E-05 | -6.9385E-07 | | | |

Table 8 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 201 to the third lens group 203, an effective focal length f7 of the seventh lens 27, a distance D2_3 between the second lens group 202 and the third lens group 203, a distance DL6_7 between the sixth lens 26 and the seventh lens 27, central thicknesses T60 and T70 of the sixth lens 26 and the seventh lens 27 on the optical axis, and thicknesses T6max and T7max from the frontmost point to the rearmost point in an optical effective portion of the imaging lens 2 according to the Numerical Example 2.

[Table 8]

| | |
|---|---|
| f(mm) | 4.740 |
| F-number | 1.90 |
| total field of view (°) | 79.4 |
| ih (mm) | 4.000 |
| TTL (mm) | 5.562 |
| fG1(mm) | 5.338 |
| fG2(mm) | 4.958 |
| fG3(mm) | -2.705 |
| fL7(mm) | -9.407 |
| DB2_3(=D11)(mm) | 0.520 |
| DL6_7(=D13)(mm) | 0.312 |
| T60(=D12)(mm) | 0.428 |
| T6max(mm) | 1.431 |
| T70(=D 14+D15)(mm) | 0.325 |
| T7max(mm) | 0.371 |

It can be seen from Table 8 that, in the Numerical Example 2, TTL/2ih=0.70, thus the condition (1) is satisfied. In addition, ih/f=0.84, thus the condition (2) is satisfied. In addition, fG1/fG2=1.08, thus the condition (3) is satisfied. In addition, fG3/fL7=0.29, thus the condition (4) is satisfied. In addition, (DB2_3-DL6_7)/ih=0.05, thus the condition (5) is satisfied. In addition, (T7max-T70)/(T6max-T60)=0.05, thus the condition (6) is satisfied.

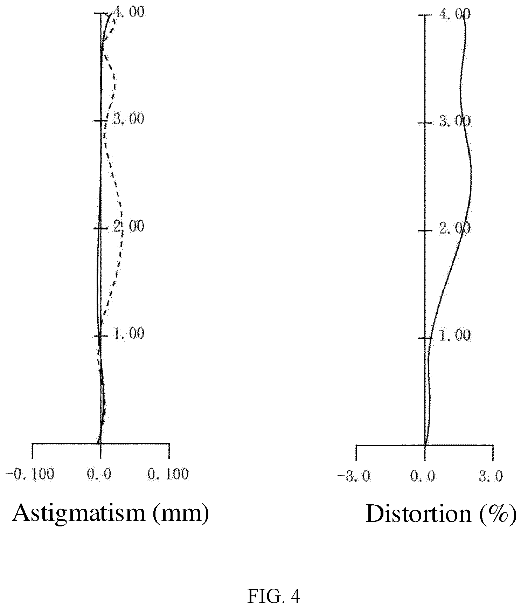

FIG. 4 is an aberration diagram at infinity focus according to the Numerical Example 2.

An astigmatism diagram and a distortion diagram are shown in FIG. 4.

In the astigmatism diagram, values in a sagittal image plane are indicated with a solid line, and values in a meridional image plane are indicated with a broken line.

It can be clearly seen from the aberration diagram that, in the Numerical Example 2, various aberrations are well corrected and the imaging performance is excellent.

<Third embodiment>

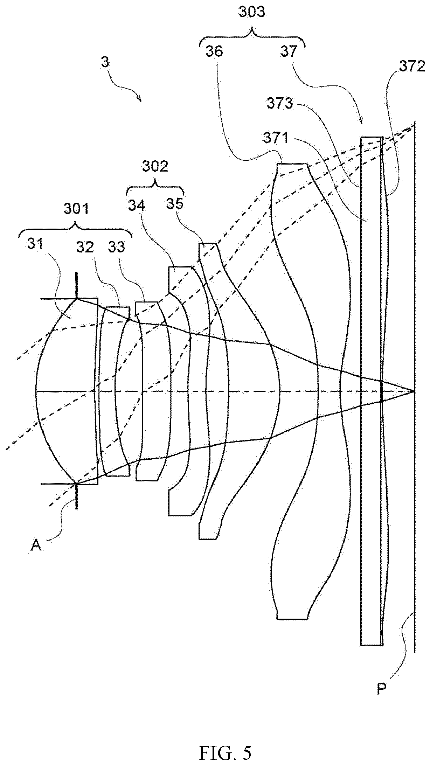

FIG. 5 is a schematic view of an imaging lens 3 according to a third embodiment.

The imaging lens 3 of the third embodiment includes: a first lens 31 with a positive refractive power, a second lens 32 with a negative refractive power, a third lens 33 with a positive refractive power, a fourth lens 34 with a negative refractive power, a fifth lens 35 with a positive refractive power, a sixth lens 36 with a negative refractive power at a center of the lens and an inflection point at a position away from the optical axis, and a seventh lens 37 with a negative refractive power at a center of the lens and an inflection point at a position away from the optical axis, which are successively arranged in order from an object side to an image side.

The first lens 31 to the third lens 33 constitute a first lens group 301. The fourth lens 34 and the fifth lens 35 constitute a second lens group 302. The sixth lens 36 and the seventh lens 37 constitute a third lens group 303.

An aperture A with a fixed opening is provided on the object side of the first lens 31. An imaging surface P of an imaging element (image sensor) is provided on an imaging surface of the imaging lens 3.

The seventh lens 37 according to the third embodiment is a composite lens formed by a substrate portion 371 made of glass and a lens portion 372 made of resin. The lens portion 372 may be located on the image side with respect to the substrate portion 371. An infrared cut layer 373 for reducing infrared rays may be formed on a front surface of the substrate portion 371. Specifically, the infrared cut layer 373 may be an infrared cut film formed by vacuum evaporation, or an infrared-absorbing ink layer formed by spin coating.

Table 9 shows lens data of a Numerical Example 3 in which specific numerical values are applied to the imaging lens 3 according to the third embodiment.

[Table 9]

| optical element | Sn | R(mm) | D(mm) | nd | vd |
|---|---|---|---|---|---|
| aperture | 1 | INFINITY | -0.590 | | |
| L1R1 | 2 | 1.859 | 0.882 | 1.54391 | 55.9 |
| L1R2 | 3 | 9.204 | 0.061 | | |
| L2R1 | 4 | 8.725 | 0.250 | 1.68040 | 18.4 |
| L2R2 | 5 | 3.790 | 0.414 | | |
| L3R1 | 6 | 47.245 | 0.426 | 1.67137 | 19.3 |
| L3R2 | 7 | -95.168 | 0.254 | | |
| L4R1 | 8 | 4.314 | 0.271 | 1.68040 | 18.4 |
| L4R2 | 9 | 3.719 | 0.338 | | |
| L5R1 | 10 | -6.855 | 0.772 | 1.54391 | 55.9 |
| L5R2 | 11 | -1.626 | 0.573 | | |
| L6R1 | 12 | -10.488 | 0.334 | 1.53464 | 56.2 |
| L6R2 | 13 | 2.305 | 0.311 | | |
| L7R1 | 14 | INFINITY | 0.300 | 1.51680 | 64.2 |
| L7R2 | 15 | INFINITY | 0.025 | 1.52885 | 53.5 |
| L7R3 | 16 | 8.464 | 0.486 | | |

In the imaging lens 3, among the fifteen lens surfaces (from the second surface to the 16th surface) of the first lens 31 to the lens portion 372 of the seventh lens 37, all surfaces other than two surfaces of the substrate portion 371 (a 14th surface and a 15th surface) are aspherical surfaces.

In Table 10 and Table 11, aspheric coefficients of the aspheric surfaces in the Numerical Example 3 is shown together with the conic constant k.

[Table 10]

| Sn | K | A3 | A4 | A5 | A6 | A7 | A8 |
|---|---|---|---|---|---|---|---|
| 2 | 4.6337E-01 | | -9.0843E-03 | | -1.0359E-03 | | 1.9573E-03 |

(continued)

| Sn | K | A3 | A4 | A5 | A6 | A7 | A8 |
|---|---|---|---|---|---|---|---|
| 3 | 3.3150E+01 | | -5.6903E-02 | | 4.4762E-02 | | 2.8010E-03 |
| 4 | 3.3349E+01 | | -7.1454E-02 | | 6.1544E-02 | | 5.0027E-02 |
| 5 | -8.0656E+01 | | 1.5646E-01 | | -3.3764E-01 | | 7.5256E-01 |
| 6 | 9.4989E+01 | | -4.4192E-02 | | 2.0011E-02 | | -1.0632E-01 |
| 7 | 0.0000E+00 | | -7.2495E-02 | | 7.1031E-02 | | -1.6578E-01 |
| 8 | -1.3226E+01 | | -1.0722E-01 | | 2.3354E-02 | | -2.1541E-03 |
| 9 | 2.2087E+00 | | -1.0028E-01 | | 5.7922E-03 | | 2.3529E-02 |
| 10 | 1.0237E+01 | | -6.2456E-03 | | -2.3986E-02 | | 2.0337E-02 |
| 11 | -3.8035E+00 | | -3.6149E-02 | | -1.0481E-02 | | 2.2975E-02 |
| 12 | 7.1424E+00 | -2.4852E-02 | -4.1270E-02 | -6.7430E-02 | 1.1562E-01 | -6.6487E-02 | 2.2898E-02 |
| 13 | -1.1884E+01 | -1.6420E-02 | 2.5480E-02 | -1.6821E-01 | 2.3109E-01 | -1.6439E-01 | 7.0911E-02 |
| 16 | -7.1228E+01 | 5.4333E-03 | -2.4440E-02 | 1.3688E-02 | -3.4914E-03 | 1.9186E-03 | -1.3310E-03 |

[Table 11]

| Sn | A9 | A10 | A11 | A12 | A14 | A16 | A18 |
|---|---|---|---|---|---|---|---|
| 2 | | -1.4673E-02 | | 1.9766E-02 | -1.4246E-02 | 5.2118E-03 | -8.4914E-04 |
| 3 | | -4.5723E-02 | | 4.5044E-02 | -2.3495E-02 | 7.2584E-03 | -1.0768E-03 |
| 4 | | -1.6591E-01 | | 1.8383E-01 | -1.1186E-01 | 3.8322E-02 | -5.6943E-03 |
| 5 | | -1.1064E+00 | | 1.0393E+00 | -5.7564E-01 | 1.6222E-01 | -1.4301E-02 |
| 6 | | 2.0890E-01 | | -2.6445E-01 | 2.0047E-01 | -8.8895E-02 | 1.8449E-02 |
| 7 | | 2.5379E-01 | | -2.6695E-01 | 1.7477E-01 | -6.4592E-02 | 1.0443E-02 |
| 8 | | -8.7455E-04 | | -4.6159E-03 | 3.3658E-03 | -8.9444E-04 | 3.6277E-05 |
| 9 | | -2.5353E-02 | | 1.4161E-02 | -4.6608E-03 | 8.3743E-04 | -6.3734E-05 |
| 10 | | -1.5762E-02 | | 8.9680E-03 | -2.6468E-03 | 3.7571E-04 | -2.0577E-05 |
| 11 | | -1.9087E-02 | | 8.8853E-03 | -2.1723E-03 | 2.6416E-04 | -1.2754E-05 |
| 12 | -5.6159E-03 | 9.4666E-04 | -9.0247E-05 | 3.3351E-06 | | | |
| 13 | -1.8797E-02 | 2.8163E-03 | -1.8476E-04 | 8.5694E-07 | | | |
| 16 | 4.4711E-04 | -7.8812E-05 | 8.5024E-06 | -5.1076E-07 | | | |

Table 12 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 301 to the third lens group 303, an effective focal length f7 of the seventh lens 37, a distance D2_3 between the second lens group 302 and the third lens group 303, a distance DL6_7 between the sixth lens 36 and the seventh lens 37, central thicknesses T60 and T70 of the sixth lens 36 and the seventh lens 37 on the optical axis, and thicknesses T6max and T7max from the frontmost point to the rearmost point in an optical effective portion of the imaging lens 3 according to the Numerical Example 3.

[Table 12]

| | |
|---|---|
| f(mm) | 4.735 |
| F-number | 1.70 |

(continued)

| | |
|---|---|
| total field of view (°) | 79.4 |
| ih (mm) | 4.000 |
| TTL (mm) | 5.696 |
| fG1(mm) | 5.463 |
| fG2(mm) | 4.059 |
| fG3(mm) | -2.793 |
| fL7(mm) | -16.001 |
| DB2_3(=D11)(mm) | 0.573 |
| DL6_7(=D13)(mm) | 0.311 |
| T60(=D12)(mm) | 0.334 |
| T6max(mm) | 1.191 |
| T70(=D14+D15)(mm) | 0.325 |
| T7max(mm) | 0.410 |

It can be seen from Table 12 that, in the Numerical Example 3, TTL/2ih=0.71, thus the condition (1) is satisfied. In addition, ih/f=0.84, thus the condition (2) is satisfied. In addition, fG1/fG2=1.35, thus the condition (3) is satisfied. In addition, fG3/fL7=0.17, thus the above condition (4) is satisfied. In addition, (DB2_3-DL6_7)/ih=0.07, thus the above condition (5) is satisfied. In addition, (T7max-T70)/(T6max-T60)=0.10, thus the above condition (6) is satisfied.

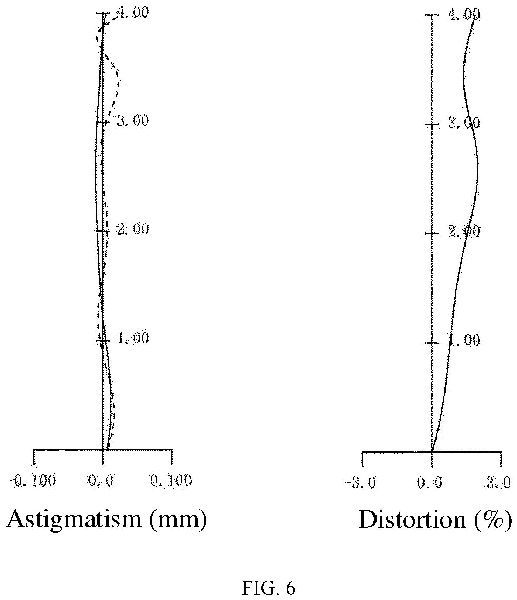

FIG. 6 is an aberration diagram at infinity focus according to the Numerical Example 3.

An astigmatism diagram and a distortion diagram are shown in FIG. 6.

In the astigmatism diagram, values in a sagittal image plane are indicated with a solid line, and values in a meridional image plane are indicated with a broken line.

It can be seen from the aberration diagram that, in the Numerical Example 3, various aberrations are well corrected, and the imaging performance is excellent.

<Fourth embodiment>

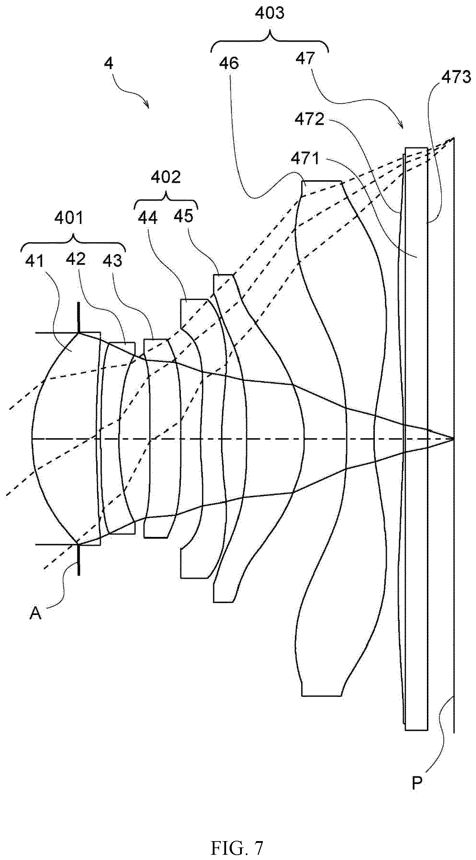

FIG. 7 is a schematic view of an imaging lens 4 according to a fourth embodiment.

The imaging lens 4 of the fourth embodiment includes: a first lens 41 with a positive refractive power, a second lens 42 with a negative refractive power, a third lens 43 with a positive refractive power, a fourth lens 44 with a negative refractive power, a fifth lens 45 with a positive refractive power, a sixth lens 46 with a negative refractive power at a center of the lens and an inflection point at a position away from the optical axis, and a seventh lens 47 with a negative refractive power at a center of the lens and an inflection point at a position away from the optical axis, which are successively arranged in order from an object side to an image side.

The first lens 41 to the third lens 43 constitute a first lens group 401. The fourth lens 44 and the fifth lens 45 constitute a second lens group 402. The sixth lens 46 and the seventh lens 47 constitute a third lens group 403.

An aperture A with a fixed opening is provided on the object side of the first lens 41. An imaging surface P of an imaging element (image sensor) is provided on an imaging surface of the imaging lens 4.

The seventh lens 47 according to the fourth embodiment is a composite lens formed by a substrate portion 471 made of glass and a lens portion 472 made of resin. The lens portion 472 may be located on the object side with respect to the substrate portion 471. An infrared cut layer 473 for reducing infrared rays may be formed on a rear surface of the substrate portion 471. Specifically, the infrared cut layer 473 may be an infrared cut film formed by vacuum evaporation, or an infrared-absorbing ink layer formed by spin coating.

Table 13 shows lens data of a Numerical Example 4 in which specific numerical values are applied to the imaging lens 4 according to the fourth embodiment.

[Table 13]

| optical element | Sn | R(mm) | D(mm) | nd | vd |
|---|---|---|---|---|---|
| aperture | 1 | INFINITY | -0.560 | | |

(continued)

| optical element | Sn | R(mm) | D(mm) | nd | vd |
|---|---|---|---|---|---|
| L1R1 | 2 | 1.859 | 0.868 | 1.54391 | 55.9 |
| L1R2 | 3 | 8.989 | 0.059 | | |
| L2R1 | 4 | 8.523 | 0.250 | 1.68040 | 18.4 |
| L2R2 | 5 | 3.781 | 0.415 | | |
| L3R1 | 6 | 35.692 | 0.420 | 1.67137 | 19.3 |
| L3R2 | 7 | -130.699 | 0.265 | | |
| L4R1 | 8 | 4.389 | 0.2861 | 1.68040 | 18.4 |
| L4R2 | 9 | 3.759 | 0.338 | | |
| L5R1 | 10 | -6.705 | 0.775 | 1.54391 | 55.9 |
| L5R2 | 11 | -1.631 | 0.572 | | |
| L6R1 | 12 | -10.571 | 0.369 | 1.53464 | 56.2 |
| L6R2 | 13 | 2.312 | 0.398 | | |
| L7R1 | 14 | -8.461 | 0.025 | 1.56437 | 37.9 |
| L7R2 | 15 | INFINITY | 0.300 | 1.51680 | 64.2 |
| L7R3 | 16 | INFINITY | 0.360 | | |

In the imaging lens 4, thirteen lens surfaces (from the second surface to the 14th surface) of the first lens 41 to the lens portions 472 of the seventh lens 47 are all aspherical surfaces.

In Table 14 and Table 15, aspheric coefficients of the aspheric surfaces in the Numerical Example 4 is shown together with the conic constant k.

[Table 14]

| Sn | K | A3 | A4 | A5 | A6 | A7 | A8 |
|---|---|---|---|---|---|---|---|
| 2 | 4.6337E-01 | | -9.4881 E-03 | | 3.6594E-04 | | 6.7370E-04 |
| 3 | 3.3150E+01 | | -5.7270E-02 | | 4.2915E-02 | | 4.9343E-03 |
| 4 | 3.3349E+01 | | -7.2983E-02 | | 6.1602E-02 | | 4.9638E-02 |
| 5 | -8.0656E+01 | | 1.5684E-01 | | -3.3839E-01 | | 7.5365E-01 |
| 6 | 9.4989E+01 | | -4.5207E-02 | | 2.4775E-02 | | -1.1048E-01 |
| 7 | 0.0000E+00 | | -7.4743E-02 | | 7.4383E-02 | | -1.6642E-01 |
| 8 | -1.3226E+01 | | -1.0525E-01 | | 2.2546E-02 | | -3.2314E-03 |
| 9 | 2.2087E+00 | | -9.3459E-02 | | 1.0368E-03 | | 2.5534E-02 |
| 10 | 1.0237E+01 | | -6.7360E-03 | | -2.4069E-02 | | 2.0508E-02 |
| 11 | -3.8035E+00 | | -3.8926E-02 | | -9.7009E-03 | | 2.2927E-02 |
| 12 | 7.1424E+00 | -1.4784E-02 | -4.6252E-02 | -6.7221E-02 | 1.1571E-01 | -6.6472E-02 | 2.2898E-02 |
| 13 | -1.1884E+01 | -1.4578E-02 | 2.9062E-02 | -1.6972E-01 | 2.3110E-01 | -1.6435E-01 | 7.0914E-02 |
| 14 | -7.1915E+01 | 1.0471 E-02 | 2.4728E-03 | -4.1524E-03 | 3.6501E-03 | -2.6430E-03 | 1.3363E-03 |

[Table 15]

| Sn | A9 | A10 | A11 | A12 | A14 | A16 | A18 |
|---|---|---|---|---|---|---|---|
| 2 | | -1.4364E-02 | | 2.0075E-02 | -1.4392E-02 | 5.1815E-03 | -8.2925E-04 |
| 3 | | -4.5479E-02 | | 4.4543E-02 | -2.3710E-02 | 7.4393E-03 | -1.0915E-03 |
| 4 | | -1.6487E-01 | | 1.8393E-01 | -1.1224E-01 | 3.8266E-02 | -5.6306E-03 |
| 5 | | -1.1067E+00 | | 1.0392E+00 | -5.7533E-01 | 1.6255E-01 | -1.4335E-02 |
| 6 | | 2.1123E-01 | | -2.6403E-01 | 2.0048E-01 | -8.8784E-02 | 1.8519E-02 |
| 7 | | 2.5333E-01 | | -2.6680E-01 | 1.7504E-01 | -6.4537E-02 | 1.0382E-02 |
| 8 | | 5.0588E-04 | | -4.6763E-03 | 3.2323E-03 | -8.9924E-04 | 4.2590E-05 |
| 9 | | -2.5536E-02 | | 1.4105E-02 | -4.6648E-03 | 8.4002E-04 | -6.3469E-05 |
| 10 | | -1.5781E-02 | | 8.9540E-03 | -2.6417E-03 | 3.7636E-04 | -2.0875E-05 |
| 11 | | -1.9081E-02 | | 8.8859E-03 | -2.1724E-03 | 2.6409E-04 | -1.2767E-05 |
| 12 | -5.6157E-03 | 9.4664E-04 | -9.0270E-05 | 3.3191E-06 | | | |
| 13 | -1.8797E-02 | 2.8162E-03 | -1.8479E-04 | 8.6042E-07 | | | |
| 14 | -4.2990E-04 | 8.3519E-05 | -8.8975E-06 | 3.8727E-07 | | | |

Table 16 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 401 to the third lens group 403, an effective focal length f7 of the seventh lens 47, a distance D2_3 between the second lens group 402 and the third lens group 403, a distance DL6_7 between the sixth lens 46 and the seventh lens 47, central thicknesses T60 and T70 of the sixth lens 46 and the seventh lens 47 on the optical axis, and thicknesses T6max and T7max from the frontmost point to the rearmost point in an optical effective portion of the imaging lens 4 according to the Numerical Example 4.

[Table 16]

| | |
|---|---|
| f(mm) | 4.735 |
| F-number | 1.68 |
| total field of view(°) | 79.4 |
| ih (mm) | 4.000 |
| TTL (mm) | 5.699 |
| fG1(mm) | 5.414 |
| fG2(mm) | 4.113 |
| fG3(mm) | -2.780 |
| fL7(mm) | -14.991 |
| DB2_3(=D11)(mm) | 0.572 |
| DL6_7(=D13)(mm) | 0.398 |
| T60(=D12)(mm) | 0.369 |
| T6max(mm) | 1.224 |
| T70(=D14+D15)(mm) | 0.325 |
| T7max(mm) | 0.395 |

It can be seen from Table 16 that, in the Numerical Example 4, TTL/2ih=0.71, thus the condition (1) is satisfied. In addition, ih/f=0.84, thus the above condition (2) is satisfied. In addition, fG1/fG2=1.32, thus the condition (3) is satisfied. In addition, fG3/fL7=0.19, thus the condition (4) is satisfied. In addition, (DB2_3-DL6_7)/ih=0.04, thus the condition (5) is satisfied. In addition, (T7max-T70)/(T6max-T60)=0.08, thus the condition (6) is satisfied.

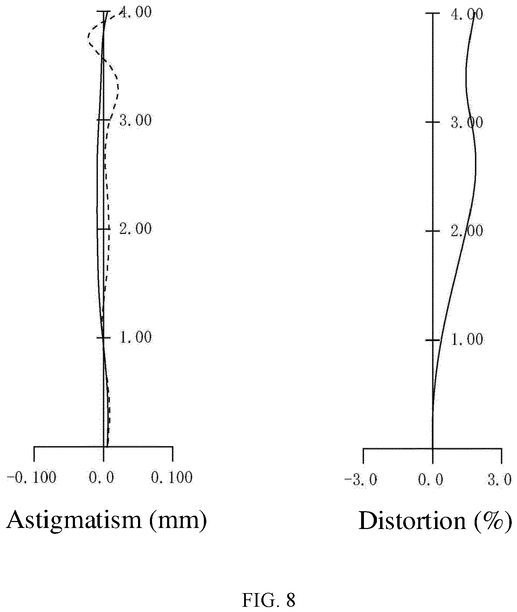

FIG. 8 is an aberration diagram at infinity focus according to the Numerical Example 4.

An astigmatism diagram and a distortion diagram are shown in FIG. 8.

In the astigmatism diagram, values in a sagittal image plane are indicated with a solid line, and values in a meridional image plane are indicated with a broken line.

It can be seen from the aberration diagram that, in the Numerical Example 4, various aberrations are well corrected, and the imaging performance is excellent.

<Fifth embodiment>

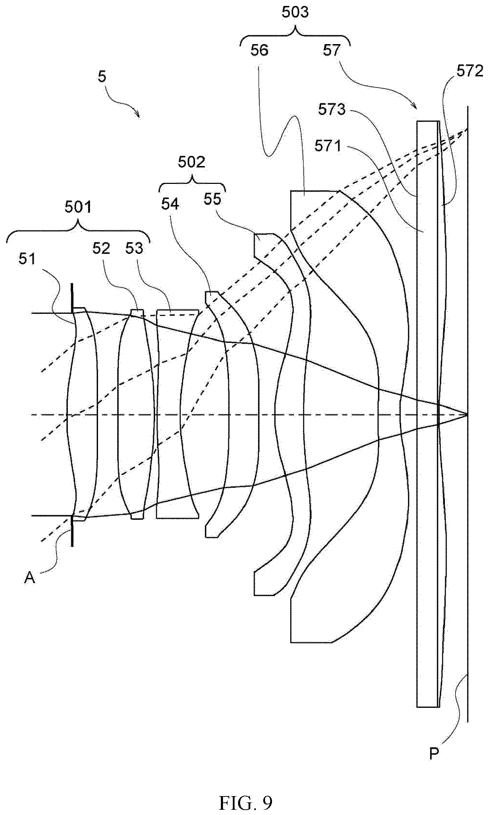

FIG. 9 is a schematic view of an imaging lens 5 according to a fifth embodiment.

The imaging lens 5 according to the fifth embodiment includes: a first lens 51 with a positive refractive power, a second lens 52 with a positive refractive power, a third lens 53 with a negative refractive power, a fourth lens 54 with a negative refractive power, a fifth lens 55 with a positive refractive power at a center of the lens and an inflection point at a position away from the optical axis, a sixth lens 56 with a negative refractive power at a center of the lens and an inflection point at a position away from the optical axis, and a seventh lens 57 with a negative refractive power at a center of the lens and an inflection point at a position away from the optical axis, which are successively arranged in order from an object side to an image side.

The first lens 51 to the third lens 53 constitute a first lens group 501. The fourth lens 54 and the fifth lens 55 constitute a second lens group 502. The sixth lens 56 and the seventh lens 57 constitute a third lens group 503.

An aperture A with a fixed opening is provided on the object side of the first lens 51. An imaging surface P of an imaging element (image sensor) is provided on an imaging surface of the imaging lens 5.

The seventh lens 57 according to the fifth embodiment is a composite lens formed by a substrate portion 571 made of glass and a lens portion 572 made of resin. The lens portion 572 may be located on the image side with respect to the substrate portion 571. An infrared cut layer 573 for reducing infrared rays may be formed on a front surface of the substrate portion 571. Specifically, the infrared cut layer 573 may be an infrared cut film formed by vacuum evaporation, or an infrared-absorbing ink layer formed by spin coating.

Table 17 shows lens data of a Numerical Example 5 in which specific numerical values are applied to the imaging lens 5 according to the fifth embodiment.

[Table 17]

| optical element | Sn | R(mm) | D(mm) | nd | vd |
|---|---|---|---|---|---|
| aperture | 1 | INFINITY | -0.069 | | |
| L1R1 | 2 | 2.929 | 0.430 | 1.54391 | 55.9 |
| L1R2 | 3 | 30.916 | 0.300 | | |
| L2R1 | 4 | -67.238 | 0.517 | 1.53464 | 56.2 |
| L2R2 | 5 | -4.706 | 0.040 | | |
| L3R1 | 6 | 6.201 | 0.322 | 1.67137 | 19.3 |
| L3R2 | 7 | 2.894 | 0.700 | | |
| L4R1 | 8 | -11.922 | 0.425 | 1.60789 | 26.9 |
| L4R2 | 9 | 17.735 | 0.224 | | |
| L5R1 | 10 | 1.853 | 0.408 | 1.54391 | 55.9 |
| L5R2 | 11 | 7.705 | 1.061 | | |
| L6R1 | 12 | 10.887 | 0.313 | 1.53464 | 56.2 |
| L6R2 | 13 | 2.285 | 0.236 | | |
| L7R1 | 14 | INFINITY | 0.300 | 1.51680 | 64.2 |
| L7R2 | 15 | INFINITY | 0.025 | 1.51788 | 54.3 |
| L7R3 | 16 | 6.514 | 0.400 | | |

In the imaging lens 5, among the thirteen lens surfaces (from the second surface to the 14th surface) of the first lens 51 to the lens portion 572 of the seventh lens 57, all surfaces other than two surfaces (a 12th surface and a 13th surface) of the substrate portion 571 are aspherical surfaces.

In Table 18 and Table 19, aspheric coefficients of the aspheric surfaces in the Numerical Example 5 is shown together with the conic constant k.

[Table 18]

| Sn | K | A3 | A4 | A5 | A6 | A7 | A8 |
|---|---|---|---|---|---|---|---|
| 2 | 0.0000E+00 | -9.0395E-04 | -3.5737E-02 | 6.3548E-02 | -2.9043E-01 | 5.3375E-01 | -5.2843E-01 |
| 3 | 0.0000E+00 | -1.8745E-03 | -2.3677E-02 | -4.8998E-02 | 1.0129E-01 | -1.4133E-01 | 1.0496E-01 |
| 4 | 0.0000E+00 | -1.4065E-02 | 1.2541E-01 | -3.7882E-01 | 8.6618E-01 | -1.1687E+00 | 9.3911 E-01 |
| 5 | 0.0000E+00 | -3.4678E-03 | 8.4711 E-02 | -1.3566E-01 | 1.1513E-01 | -6.8856E-02 | 3.4691 E-02 |
| 6 | 0.0000E+00 | -1.1226 E-02 | 1.1006E-02 | -2.0862E-01 | 3.1508E-01 | -3.0788E-01 | 1.7371E-01 |
| 7 | 0.0000E+00 | -3.6902E-03 | -6.6501E-03 | -3.5355E-01 | 9.6940E-01 | -1.3767E+00 | 1.1029E+00 |
| 8 | 0.0000E+00 | 3.4249E-03 | -1.5964E-02 | -2.8907E-01 | 1.1861E+00 | -2.6583E+00 | 3.9363E+00 |
| 9 | 0.0000E+00 | -3.8428E-02 | 74687E-02 | -1.4227E+00 | 4.7848E+00 | -9.3868E+00 | 1.2034E+01 |
| 10 | -1.2380E+00 | 5.2402E-03 | -1.8204E-01 | 2.2265E-01 | -3.2670E-01 | 4.5687E-01 | -4.4091 E-01 |
| 11 | 0.0000E+00 | 2.4865E-02 | -2.1540E-01 | 1.0239E+00 | -2.3057E+00 | 3.0660E+00 | -2.6645E+00 |
| 12 | 0.0000E+00 | 2.4097E-01 | -1.1375E+00 | 1.5796E+00 | -1.4136E+00 | 8.2497E-01 | -2.9457E-01 |
| 13 | -4.8204E+01 | 3.6359E-01 | -8.7137E-01 | 9.0462E-01 | -5.8104E-01 | 2.4478E-01 | -6.4917E-02 |
| 16 | -1.1262E+00 | -1.8903E-02 | -8.7367E-03 | 5.9592E-03 | -7.3350E-03 | 6.6879E-03 | -3.5572E-03 |

[Table 19]

| Sn | A9 | A10 | A11 | A12 |
|---|---|---|---|---|
| 2 | 2.5153E-01 | -4.7879E-02 | 4.3220E-03 | -1.5497E-03 |
| 3 | -4.0356E-02 | 6.2539E-03 | 1.9207E-03 | -9.8086E-04 |
| 4 | -4.0341 E-01 | 7.1401 E-02 | 1.6266E-04 | -3.3199E-04 |
| 5 | -1.5318E-02 | 4.5878E-03 | 8.9135E-04 | -5.9109E-04 |
| 6 | -3.4464E-02 | -5.7239E-04 | -4.2321 E-04 | -1.9927E-05 |
| 7 | -4.6257E-01 | 8.3563E-02 | -4.2065E-03 | 1.6447E-03 |
| 8 | -3.8802E+00 | 2.4130E+00 | -8.5287E-01 | 1.3014E-01 |
| 9 | -1.0065E+01 | 5.2649E+00 | -1.5622E+00 | 2.0068E-01 |
| 10 | 2.5487E-01 | -7.9475E-02 | 1.0244E-02 | -1.4454E-05 |
| 11 | 1.5232E+00 | -5.4827E-01 | 1.1193E-01 | -9.8316E-03 |
| 12 | 5.8830E-02 | -5.0468E-03 | -1.4133E-05 | 9.0139E-07 |
| 13 | 9.4848E-03 | -4.7731 E-04 | -3.3871 E-05 | 2.8810E-06 |
| 16 | 1.2156E-03 | -2.6322E-04 | 3.2285E-05 | -1.6894E-06 |

Table 20 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 501 to the third lens group 503, an effective focal length f7 of the seventh lens 57, a distance D2_3 between the second lens group 502 and the third lens group 503, a distance DL6_7 between the sixth lens 56 and the seventh lens 57, central thicknesses T60 and T70 of the sixth lens 56 and the seventh lens 57 on the optical axis, and thicknesses T6max and T7max from the frontmost point to the rearmost point in an optical effective portion of the imaging lens 5 according to the Numerical Example 5.

[Table 20]

| f(mm) | 4.693 |
|---|---|
| F-number | 1.66 |
| total field of view( °) | 80.4 |
| ih (mm) | 4.000 |
| TTL (mm) | 5.701 |
| fG1(mm) | 5.876 |
| fG2(mm) | 6.728 |
| fG3(mm) | -3.739 |
| fL7(mm) | -12.620 |
| DB2_3(=D11)(mm) | 1.061 |
| DL6_7(≈D13)(mm) | 0.236 |
| T60(=D12)(mm) | 0.313 |
| T6max(mm) | 1.671 |
| T70(=D14+D15)(mm) | 0.325 |
| T7max(mm) | 0.419 |

It can be seen from Table 20 that, in the Numerical Example 5, TTL/2ih=0.71, thus the condition (1) is satisfied. In addition, ih/f=0.85, thus the condition (2) is satisfied. In addition, fG1/fG2=0.87, thus the condition (3) is satisfied. In addition, fG3/fL7=0.30, thus the condition (4) is satisfied. In addition, (DB2_3-DL6_7)/ih=0.21, thus the condition (5) is satisfied. In addition, (T7max-T70)/(T6max-T60)=0.07, thus the condition (6) is satisfied.

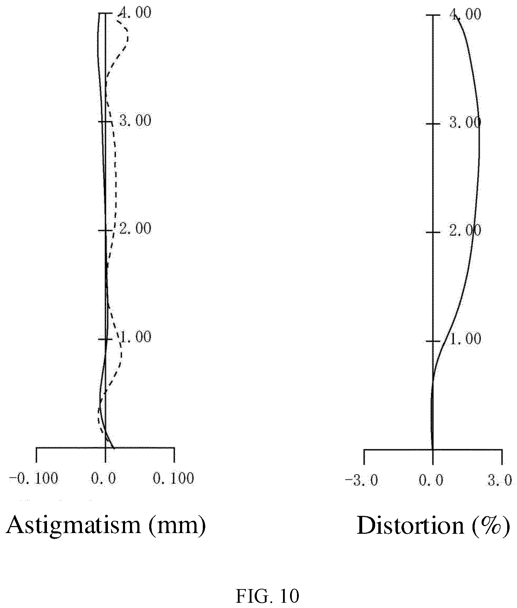

FIG. 10 is an aberration diagram at infinity focus according to the Numerical Example 5.

An astigmatism diagram and a distortion diagram are shown in FIG. 10.

In the astigmatism diagram, values in a sagittal image plane is indicated with a solid line, and values in a meridional image plane is indicated with a broken line.

It can be seen from the aberration diagram that, in the Numerical Example 5, various aberrations are well corrected in Numerical Example 5, and the imaging performance is excellent.


<Sixth embodiment>

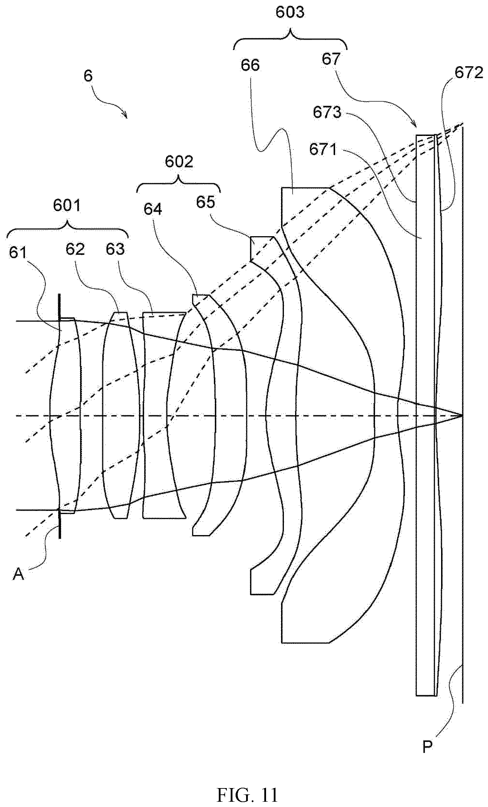

FIG. 11 is a schematic view of an imaging lens 6 according to a sixth embodiment.

The imaging lens 6 according to the sixth embodiment includes: a first lens 61 with a positive refractive power, a second lens 62 with a positive refractive power, a third lens 63 with a negative refractive power, a fourth lens 64 with a negative refractive power, a fifth lens 65 with a positive refractive power at a center of the lens and an inflection point at a position away from the optical axis, a sixth lens 66 with a negative refractive power at a center of the lens and an inflection point at a position away from the optical axis, and a seventh lens 67 with a negative refractive power at a center of the lens and an inflection point at a position away from the optical axis, which are successively arranged in order from an object side to an image side.

The first lens 61 to the third lens 63 constitute a first lens group 601. The fourth lens 64 and the fifth lens 65 constitute a second lens group 602. The sixth lens 66 and the seventh lens 67 constitute a third lens group 603.

An aperture A with a fixed opening is provided on the object side of the first lens 61. An imaging surface P of an imaging element (image sensor) is provided on an imaging surface of the imaging lens 6.

The seventh lens 67 according to the sixth embodiment is a composite lens formed by a substrate portion 671 made of glass and a lens portion 672 made of resin. The lens portion 672 may be located on the image side with respect to the substrate portion 671. An infrared cut layer 673 for reducing infrared rays may be formed on a front surface of the substrate portion 671. Specifically, the infrared cut layer 673 may be an infrared cut film formed by vacuum evaporation, or an infrared-absorbing ink layer formed by spin coating.

Table 21 shows lens data of a Numerical Example 6 in which specific numerical values are applied to the imaging lens 6 according to the sixth embodiment.

[Table 21]

| optical element | Sn | R(mm) | D(mm) | nd | vd |
|---|---|---|---|---|---|
| aperture | 1 | INFINITY | -0.098 | | |
| L1R1 | 2 | 2.951 | 0.430 | 1.54391 | 55.9 |
| L1R2 | 3 | 29.068 | 0.297 | | |
| L2R1 | 4 | -52.048 | 0.519 | 1.53464 | 56.2 |
| L2R2 | 5 | -4.317 | 0.045 | | |
| L3R1 | 6 | 6.309 | 0.322 | 1.67137 | 19.3 |
| L3R2 | 7 | 2.859 | 0.672 | | |
| L4R1 | 8 | -14.090 | 0.430 | 1.60789 | 26.9 |
| L4R2 | 9 | 33.190 | 0.270 | | |
| L5R1 | 10 | 2.036 | 0.409 | 1.54391 | 55.9 |
| L5R2 | 11 | 9.101 | 1.085 | | |
| L6R1 | 12 | 35.915 | 0.320 | 1.53464 | 56.2 |
| L6R2 | 13 | 2.186 | 0.258 | | |
| L7R1 | 14 | INFINITY | 0.250 | 1.51680 | 64.2 |
| L7R2 | 15 | INFINITY | 0.025 | 1.51788 | 54.3 |
| L7R3 | 16 | 10.372 | 0.371 | | |

In the imaging lens 6, among the thirteen lens surfaces (from the second surface to the 14th surface) of the first lens 61 to the lens portions 672 of the seventh lens 67, all surfaces other than two surfaces (a 12th surface and a 13th surface) of the substrate portion 671 are aspherical surfaces.

In Table 22 and Table 23, aspheric coefficients of the aspheric surfaces in the Numerical Example 6 is shown together with the conic constant k.

[Table 22]

| Sn | K | A3 | A4 | A5 | A6 | A7 | A8 |
|---|---|---|---|---|---|---|---|
| 2 | 0.0000E+00 | -5.9722E-03 | -2.2861E-02 | 5.3916E-02 | -2.8981E-01 | 5.3468E-01 | -5.2677E-01 |
| 3 | 0.0000E+00 | 2.2731E-04 | -2.4712E-02 | -4.5620E-02 | 1.0158E-01 | -1.4142E-01 | 1.0512E-01 |
| 4 | 0.0000E+00 | -1.3807E-02 | 1.2351E-01 | -3.7741E-01 | 8.6653E-01 | -1.1693E+00 | 9.3896E-01 |
| 5 | 0.0000E+00 | -5.7171E-03 | 8.7340E-02 | -1.3678E-01 | 1.1500E-01 | -6.9086E-02 | 3.4868E-02 |
| 6 | 0.0000E+00 | -1.1475E-02 | 1.2893E-02 | -2.0778E-01 | 3.1572E-01 | -3.0778E-01 | 1.7321 E-01 |
| 7 | 0.0000E+00 | -6.1130E-03 | -2.2813E-03 | -3.5097E-01 | 9.5772E-01 | -1.3687E+00 | 1.1049E+00 |
| 8 | 0.0000E+00 | 1.0642E-02 | -3.7025E-02 | -2.7464E-01 | 1.1940E+00 | -2.6723E+00 | 3.9365E+00 |
| 9 | 0.0000E+00 | -1.6496E-02 | 7.7675E-02 | -1.4256E+00 | 4.7670E+00 | -9.3747E+00 | 1.2037E+01 |
| 10 | -1.2416E+00 | 1.1490E-02 | -1.3415E-01 | 1.6003E-01 | -3.0641E-01 | 4.6382E-01 | -4.4306E-01 |
| 11 | 0.0000E+00 | 3.1645E-02 | -2.2527E-01 | 1.0247E+00 | -2.3044E+00 | 3.0665E+00 | -2.6644E+00 |
| 12 | 0.0000E+00 | 2.3961E-01 | -1.1687E+00 | 1.5960E+00 | -1.4087E+00 | 8.2400E-01 | -2.9518E-01 |
| 13 | -3.7931E+01 | 3.0305E-01 | -8.1485E-01 | 8.6971E-01 | -5.7227E-01 | 2.4746E-01 | -6.5832E-02 |
| 16 | 0.0000E+00 | | -9.3188E-03 | | 6.4111E-04 | | -1.0574E-05 |

[Table 23]

| Sn | A9 | A10 | A11 | A12 | A14 | A16 |
|---|---|---|---|---|---|---|
| 2 | 2.5313E-01 | -4.7955E-02 | 2.5911E-03 | -8.9271E-04 | | |
| 3 | -3.9820E-02 | 6.2042E-03 | 1.9940E-03 | -1.0823E-03 | | |
| 4 | -4.0354E-01 | 7.1378E-02 | 3.0348E-04 | -4.1888E-04 | | |
| 5 | -1.5054E-02 | 4.4319E-03 | 8.0645E-04 | -5.8950E-04 | | |
| 6 | -3.4766E-02 | -7.2736E-04 | -4.3446E-04 | 1.2960E-04 | | |
| 7 | -4.6514E-01 | 8.1988E-02 | -2.8575E-03 | 1.4664E-03 | | |
| 8 | -3.8737E+00 | 2.4122E+00 | -8.5574E-01 | 1.3135E-01 | | |
| 9 | -1.0067E+01 | 5.2627E+00 | -1.5614E+00 | 2.0084E-01 | | |
| 10 | 2.5270E-01 | -7.9155E-02 | 1.0677E-02 | -1.3607E-04 | | |
| 11 | 1.5232E+00 | -5.4830E-01 | 1.1189E-01 | -9.8152E-03 | | |
| 12 | 5.8737E-02 | -5.0330E-03 | -5.0300E-06 | 2.9259E-06 | | |
| 13 | 9.1421E-03 | -4.2770E-04 | 4.0546E-06 | -4.1691E-06 | | |
| 16 | | -4.3256E-07 | | -1.5293E-08 | 1.2042E-09 | 8.9558E-12 |

Table 24 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 601 to the third lens group 603, an effective focal length f7 of the seventh lens 67, a distance D2_3 between the second lens group 602 and the third lens group 603, a distance DL6_7 between the sixth lens 66 and the seventh lens 67, central thicknesses T60 and T70 of the sixth lens 66 and the seventh lens 67 on the optical axis, and thicknesses T6max and T7max from the frontmost point to the rearmost point in an optical effective portion of the imaging lens 6 according to the Numerical Example 6.

[Table 24]

| | |
|---|---|
| f(mm) | 4.675 |
| F-number | 1.80 |
| total field of view(°) | 80.4 |
| ih (mm) | 4.000 |
| TTL (mm) | 5.702 |
| fG1(mm) | 5.851 |
| fG2(mm) | 6.450 |
| fG3(mm) | -3.526 |
| fL7(mm) | -20.094 |
| DB2_3(=D11)(mm) | 1.085 |
| DL6_7(=D13)(mm) | 0.258 |
| T60(=D12)(mm) | 0.320 |
| T6max(mm) | 1.682 |
| T70(=D14+D15)(mm) | 0.275 |
| T7max(mm) | 0.358 |

It can be seen from Table 24 that, in the Numerical Example 6, TTL/2ih=0.71, thus the condition (1) is satisfied. In addition, ih/f=0.86, thus the condition (2) is satisfied. In addition, fG1/fG2=0.91, thus the condition (3) is satisfied. In addition, fG3/fL7=0.18, thus the condition (4) is satisfied. In addition, (DB2_3-DL6_7)/ih=0.21, thus the condition (5) is satisfied. In addition, (T7max-T70)/(T6max-T60)=0.06, thus the condition (6) is satisfied.

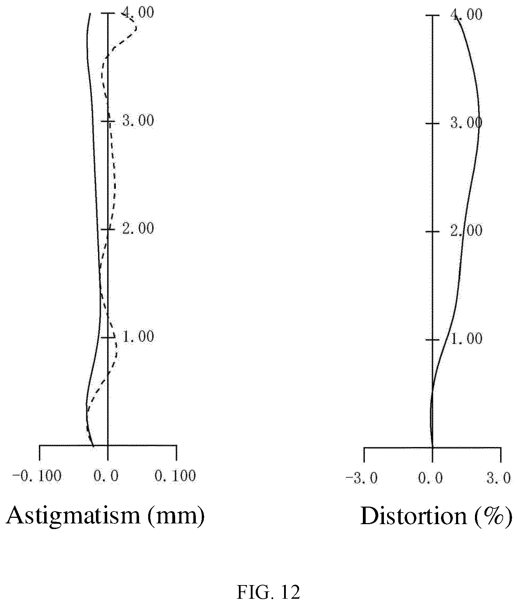

FIG. 12 is an aberration diagram at infinity focus according to the Numerical Example 6.

An astigmatism diagram and a distortion diagram are shown in FIG. 12.

In the astigmatism diagram, values in a sagittal image plane are indicated with a solid line, and values in a meridional image plane are indicated with a broken line.

It can be seen from the aberration diagram that, in the Numerical Example 6, various aberrations are well corrected, and the imaging performance is excellent.

<Seventh embodiment>

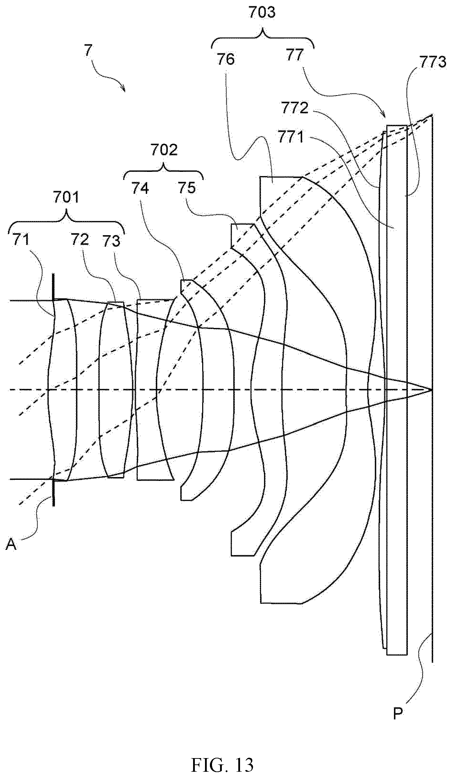

FIG. 13 is a schematic view of an imaging lens 7 according to a seventh embodiment.

The imaging lens 7 according to the seventh embodiment includes: a first lens 71 with a positive refractive power, a second lens 72 with a positive refractive power, a third lens 73 with a negative refractive power, a fourth lens 74 with a negative refractive power, a fifth lens 75 with a positive refractive power at a center of the lens and an inflection point at a position away from the optical axis, a sixth lens 76 with a negative refractive power at a center of the lens and an inflection point at a position away from the optical axis, and a seventh lens 77 with a negative refractive power at a center of the lens and an inflection point at a position away from the optical axis, which are successively arranged in order from an object side to an image side.

The first lens 71 to the third lens 73 constitute a first lens group 701. The fourth lens 74 and the fifth lens 75 constitute a second lens group 702. The sixth lens 76 and the seventh lens 77 constitute a third lens group 703.

An aperture A with a fixed opening is provided on the object side of the first lens 71. An imaging surface P of an imaging element (image sensor) is provided on an imaging surface of the imaging lens 7.

The seventh lens 77 according to the seventh embodiment is a composite lens formed by a substrate portion 771 made of glass and a lens portion 772 made of resin. The lens portion 772 may be located on the object side with respect to the substrate portion 771. An infrared cut layer 773 for reducing infrared rays may be formed on a rear surface of the substrate portion 771. Specifically, the infrared cut layer 773 may be an infrared cut film formed by vacuum evaporation, or an infrared-absorbing ink layer formed by spin coating.

Table 25 shows lens data of a Numerical Example 7 in which specific numerical values are applied to the imaging lens 7 according to the seventh embodiment.

[Table 25]

| optical element | Sn | R(mm) | D(mm) | nd | vd |
|---|---|---|---|---|---|
| aperture | 1 | INFINITY | -0.011 | | |
| L1R1 | 2 | 3.235 | 0.430 | 1.54391 | 55.9 |
| L1R2 | 3 | 77.120 | 0.329 | | |
| L2R1 | 4 | 41.485 | 0.500 | 1.53464 | 56.2 |
| L2R2 | 5 | -4.192 | 0.040 | | |
| L3R1 | 6 | 5.548 | 0.312 | 1.68040 | 18.4 |
| L3R2 | 7 | 2.553 | 0.698 | | |
| L4R1 | 8 | -7.783 | 0.455 | 1.61499 | 26.0 |
| L4R2 | 9 | 101.250 | 0.253 | | |
| L5R1 | 10 | 1.917 | 0.463 | 1.54391 | 55.9 |
| L5R2 | 11 | 8.333 | 0.950 | | |
| L6R1 | 12 | 9.983 | 0.325 | 1.53464 | 56.2 |
| L6R2 | 13 | 2.377 | 0.254 | | |
| L7R1 | 14 | -4.716 | 0.025 | 1.51788 | 54.3 |
| L7R2 | 15 | INFINITY | 0.300 | 1.51680 | 64.2 |
| L7R3 | 16 | INFINITY | 0.377 | | |

In the imaging lens 7, thirteen lens surfaces (from the second surface to the 14th surface) of the first lens 71 to the lens portions 772 of the seven lens 77 are aspherical surfaces.

In Table 26 and Table 27, aspheric coefficients of the aspheric surfaces in the Numerical Example 7 is shown together with the conic constant k.

[Table 26]

| Sn | K | A3 | A4 | A5 | A6 | A7 | A8 |
|---|---|---|---|---|---|---|---|
| 2 | 0.0000E+00 | -5.5200E-03 | -3.2600E-02 | 5.9481 E-02 | -2.9575E-01 | 5.3352E-01 | -5.2624E-01 |
| 3 | 0.0000E+00 | -1.0612E-03 | -2.9244E-02 | -4.9687E-02 | 1.0022E-01 | -1.4151E-01 | 1.0552E-01 |
| 4 | 0.0000E+00 | -1.1516E-02 | 1.2216E-01 | -3.7853E-01 | 8.6518E-01 | -1.1682E+00 | 9.3892E-01 |
| 5 | 0.0000E+00 | -1.8758E-03 | 8.7824E-02 | -1.3712E-01 | 1.1351E-01 | -6.7454E-02 | 3.7213E-02 |
| 6 | 0.0000E+00 | -7.5755E-03 | -2.1193E-03 | -1.9975E-01 | 3.1864E-01 | -3.0551E-01 | 1.7411E-01 |
| 7 | 0.0000E+00 | -4.4277E-03 | -2.0132E-02 | -3.4770E-01 | 9.7255E-01 | -1.3741E+00 | 1.1023E+00 |
| 8 | 0.0000E+00 | 9.0160E-04 | -2.6324E-02 | -2.8592E-01 | 1.1889E+00 | -2.6642E+00 | 3.9358E+00 |
| 9 | 0.0000E+00 | -3.2126E-02 | 5.9098E-02 | -1.4194E+00 | 4.7854E+00 | -9.3883E+00 | 1.2033E+01 |
| 10 | -1.1102E+00 | 4.8139E-03 | -1.8476E-01 | 2.1384E-01 | -3.2716E-01 | 4.5808E-01 | -4.4050E-01 |
| 11 | 0.0000E+00 | 2.0311 E-02 | -2.1430E-01 | 1.0205E+00 | -2.3059E+00 | 3.0659E+00 | -2.6644E+00 |
| 12 | 0.0000E+00 | 2.3818E-01 | -1.1364E+00 | 1.5788E+00 | -1.4140E+00 | 8.2491E-01 | -2.9453E-01 |
| 13 | -4.4368E+01 | 3.7060E-01 | -8.7886E-01 | 9.0499E-01 | -5.8090E-01 | 2.4488E-01 | -6.4937E-02 |
| 14 | 3.0859E-02 | 6.0269E-02 | -2.6140E-03 | -6.5964E-03 | 7.2680E-03 | -6.6038E-03 | 3.5818E-03 |

[Table 27]

| Sn | A9 | A10 | A11 | A12 |
|---|---|---|---|---|
| 2 | 2.5319E-01 | -4.7544E-02 | 4.2051E-03 | -2.1341E-03 |
| 3 | -3.9768E-02 | 6.4566E-03 | 1.8198E-03 | -1.2751 E-03 |
| 4 | -4.0340E-01 | 7.1815E-02 | 8.4965E-04 | -7.8616E-04 |
| 5 | -1.4010E-02 | 4.9251 E-03 | 5.9825E-04 | -1.1692E-03 |
| 6 | -3.5025E-02 | -1.0999E-03 | -6.9618E-04 | -1.8680E-04 |
| 7 | -4.6356E-01 | 8.2738E-02 | -4.3459E-03 | 2.0763E-03 |
| 8 | -3.8769E+00 | 2.4127E+00 | -8.5398E-01 | 1.3019E-01 |
| 9 | -1.0064E+01 | 5.2655E+00 | -1.5624E+00 | 2.0047E-01 |
| 10 | 2.5560E-01 | -8.0137E-02 | 1.0199E-02 | 5.8748E-05 |
| 11 | 1.5232E+00 | -5.4826E-01 | 1.1194E-01 | -9.8323E-03 |
| 12 | 5.8827E-02 | -5.0468E-03 | -1.3449E-05 | 1.6935E-06 |
| 13 | 9.4361 E-03 | -4.5661 E-04 | -2.6329E-05 | -7.4823E-08 |
| 14 | -1.1781E-03 | 2.4862E-04 | -3.1890E-05 | 1.8711E-06 |

Table 28 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 701 to the third lens group 703, an effective focal length f7 of the seventh lens 77, a distance D2_3 between the second lens group 702 and the third lens group 703, a distance DL6_7 between the sixth lens 76 and the seventh lens 77, central thicknesses T60 and T70 of the sixth lens 76 and the seventh lens 77 on the optical axis, and thicknesses T6max and T7max from the frontmost point to the rearmost point in an optical effective portion of the imaging lens 7 according to the Numerical Example 7.

[Table 28]

| | |
|---|---|
| f(mm) | 4.679 |
| F-number | 1.80 |
| total field of view(°) | 80.4 |
| ih (mm) | 4.000 |
| TTL(mm) | 5.711 |
| fG1(mm) | 5.564 |
| fG2(mm) | 6.806 |
| fG3(mm) | -3.550 |
| fL7(mm) | -9.136 |
| DB2_3(=D11)(mm) | 0.950 |
| DL6_7(=D13)(mm) | 0.254 |
| T60(=D12)(mm) | 0.325 |
| T6max(mm) | 1.714 |
| T70(=D14+D15)(mm) | 0.325 |
| T7max(mm) | 0.412 |

It can be seen from Table 28 that, in the Numerical Example 7, TTL/2ih=0.71, thus the condition (1) is satisfied. In addition, ih/f=0.85, thus the condition (2) is satisfied. In addition, fG1/fG2=0.82, thus the condition (3) is satisfied. In addition, fG3/fL7=0.39, thus the condition (4) is satisfied. In addition, (DB2_3-DL6_7)/ih=0.17, thus the condition (5) is satisfied. In addition, (T7max-T70)/(T6max-T60)=0.06, thus the condition (6) is satisfied.

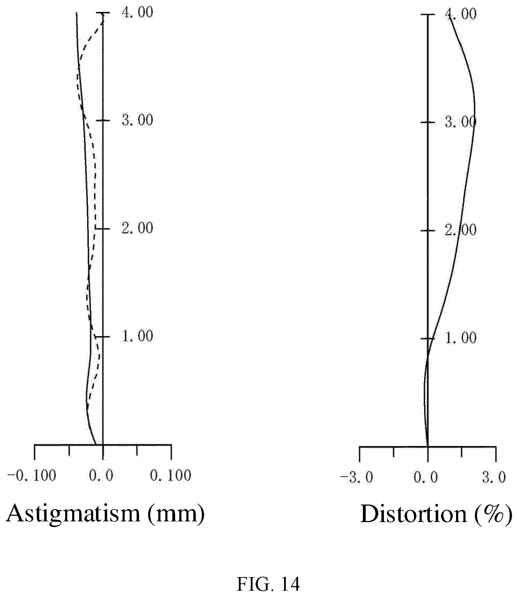

FIG. 14 is an aberration diagram at infinity focus according to the Numerical Example 7.

An astigmatism diagram and a distortion diagram are shown in FIG. 14.

In the astigmatism diagram, values in a sagittal image plane are indicated with a solid line, and values in a meridional image plane are indicated with a broken line.

It can be seen from the aberration diagram that, in the Numerical Example 7, various aberrations are well corrected, and the imaging performance is excellent.

<Eighth embodiment>

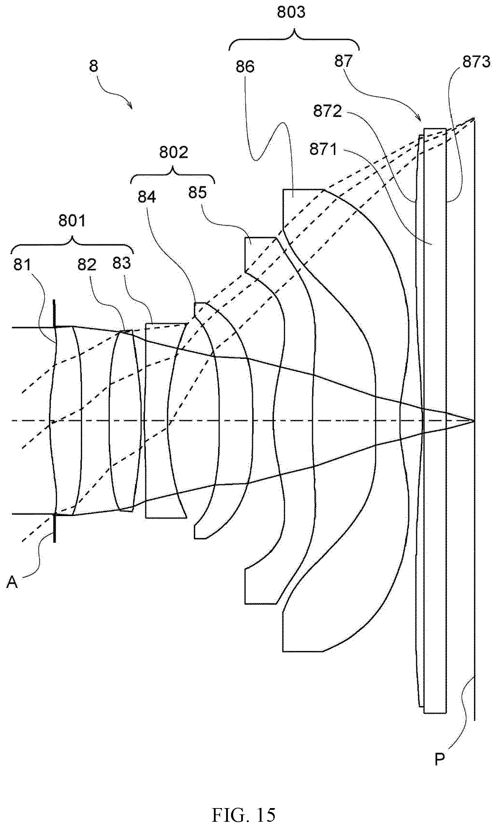

FIG. 15 is a schematic view of an imaging lens 8 according to an eighth embodiment.

The imaging lens 8 according to the eighth embodiment includes: a first lens 81 with a positive refractive power, a second lens 82 with a positive refractive power, a third lens 83 with a negative refractive power, a fourth lens 84 with a negative refractive power, a fifth lens 85 with a positive refractive power at a center of the lens and an inflection point at a position away from the optical axis, a sixth lens 86 with a negative refractive power at a center of the lens and an inflection point at a position away from the optical axis, and a seventh lens 87 with a negative refractive power at a center of the lens and an inflection point at a position away from the optical axis, which are successively arranged in order from an object side to an image side.

The first lens 81 to the third lens 83 constitute a first lens group 801. The fourth lens 84 and the fifth lens 85 constitute a second lens group 802. The sixth lens 86 and the seventh lens 87 constitute a third lens group 803.

An aperture A with a fixed opening is provided on the object side of the first lens 81. An imaging surface P of an imaging element (image sensor) is provided on an imaging surface of the imaging lens 8.

The seventh lens 87 according to the eighth embodiment is a composite lens formed by a substrate portion 871 made of blue glass and a lens portion 872 made of resin. The lens portion 872 may be located on the object side with respect to the substrate portion 871. An infrared cut layer 873 for reducing infrared rays may be formed on a rear surface of the substrate portion 871. Specifically, the infrared cut layer 873 may be an infrared cut film formed by vacuum evaporation, or an infrared-absorbing ink layer formed by spin coating. In the eighth embodiment, even when the infrared cut layer 873 is not formed, the infrared cut function can be achieved by blue glass that is the material of the lens of the seventh lens 87.

Table 29 shows lens data of a Numerical Example 8 in which specific numerical values are applied to the imaging lens 8 according to the eighth embodiment.

[Table 29]

| optical element | Sn | R(mm) | D(mm) | nd | vd |
|---|---|---|---|---|---|
| aperture | 1 | INFINITY | -0.058 | | |
| L1R1 | 2 | 3.441 | 0.430 | 1.54391 | 55.9 |
| L1R2 | 3 | 182.590 | 0.367 | | |
| L2R1 | 4 | 12.933 | 0.427 | 1.53464 | 56.2 |
| L2R2 | 5 | -4.443 | 0.040 | | |
| L3R1 | 6 | 6.686 | 0.311 | 1.67137 | 19.3 |
| L3R2 | 7 | 2.620 | 0.699 | | |
| L4R1 | 8 | -8.299 | 0.438 | 1.60789 | 26.9 |
| L4R2 | 9 | -225.450 | 0.272 | | |
| L5R1 | 10 | 2.149 | 0.526 | 1.54391 | 55.9 |
| L5R2 | 11 | 12.260 | 0.839 | | |
| L6R1 | 12 | 11.563 | 0.327 | 1.53464 | 56.2 |
| L6R2 | 13 | 2.508 | 0.300 | | |
| L7R1 | 14 | -4.593 | 0.025 | 1.56437 | 37.9 |
| L7R2 | 15 | INFINITY | 0.300 | 1.51680 | 64.2 |
| L7R3 | 16 | INFINITY | 0.374 | | |

In the imaging lens 8, thirteen lens surfaces (from the second surface to the 14th surface) of the first lens 81 to the lens portions 872 of the seventh lens 87 are aspherical surfaces.

In Table 30 and Table 31, aspheric coefficients of the aspheric surfaces in the Numerical Example 8 is shown together with the conic constant k.

[Table 30]

| Sn | K | A3 | A4 | A5 | A6 | A7 | A8 |
|---|---|---|---|---|---|---|---|
| 2 | 0.0000E+00 | -3.2987E-03 | -4.4085E-02 | 7.6552E-02 | -3.0794E-01 | 5.2955E-01 | -5.2017E-01 |
| 3 | 0.0000E+00 | 2.9985E-04 | -3.7181E-02 | -4.0957E-02 | 9.2161E-02 | -1.3902E-01 | 1.0717E-01 |
| 4 | 0.0000E+00 | -1.1668E-02 | 1.2140E-01 | -3.7888E-01 | 8.6654E-01 | -1.1694E+00 | 9.3726E-01 |
| 5 | 0.0000E+00 | -1.9867E-03 | 9.0122E-02 | -1.4356E-01 | 1.1403E-01 | -6.5953E-02 | 3.9624E-02 |
| 6 | 0.0000E+00 | -5.4257E-03 | -7.1328E-04 | -1.9597E-01 | 3.1380E-01 | -3.0426E-01 | 1.7894E-01 |
| 7 | 0.0000E+00 | -8.8935E-03 | 3.3793E-03 | -3.7439E-01 | 9.8420E-01 | -1.3650E+00 | 1.1006E+00 |
| 8 | 0.0000E+00 | -4.4224E-03 | -2.2123E-02 | -3.0103E-01 | 1.2039E+00 | -2.6715E+00 | 3.9350E+00 |
| 9 | 0.0000E+00 | -2.5696E-02 | 4.5606E-02 | -1.3946E+00 | 4.7630E+00 | -9.3917E+00 | 1.2041E+01 |
| 10 | -8.3920E-01 | 1.0801E-03 | -1.6154E-01 | 1.6912E-01 | -2.9775E-01 | 4.5011E-01 | -4.4283E-01 |
| 11 | 0.0000E+00 | 1.9480E-02 | -2.2124E-01 | 1.0283E+00 | -2.3072E+00 | 3.0648E+00 | -2.6644E+00 |
| 12 | 0.0000E+00 | 2.4791 E-01 | -1.1315E+00 | 1.5767E+00 | -1.4151E+00 | 8.2474E-01 | -2.9454E-01 |
| 13 | -5.4705E+01 | 3.9740E-01 | -8.9980E-01 | 9.1075E-01 | -5.8079E-01 | 2.4472E-01 | -6.5060E-02 |
| 14 | 1.3008E-01 | 6.5062E-02 | -4.7209E-03 | -6.7446E-03 | 7.6358E-03 | -6.6297E-03 | 3.5650E-03 |

[Table 31]

| Sn | A9 | A10 | A11 | A12 |
|---|---|---|---|---|
| 2 | 2.5715E-01 | -4.9112E-02 | 1.3824E-03 | -1.0705E-03 |
| 3 | -3.9903E-02 | 5.8193E-03 | 1.3809E-03 | -1.0507E-03 |
| 4 | -4.0133E-01 | 7.2476E-02 | 1.3267E-03 | -1.3831E-03 |
| 5 | -1.1976E-02 | 5.1518E-03 | -6.7265E-05 | -1.9856E-03 |
| 6 | -3.1859E-02 | -1.8333E-03 | -5.5567E-03 | 1.0823E-03 |
| 7 | -4.6759E-01 | 8.0619E-02 | -1.0955E-03 | 1.3099E-03 |
| 8 | -3.8756E+00 | 2.4129E+00 | -8.5437E-01 | 1.3022E-01 |
| 9 | -1.0062E+01 | 5.2636E+00 | -1.5633E+00 | 2.0084E-01 |
| 10 | 2.5746E-01 | -8.0069E-02 | 9.9689E-03 | 7.2676E-05 |
| 11 | 1.5233E+00 | -5.4818E-01 | 1.1198E-01 | -9.8570E-03 |
| 12 | 5.8894E-02 | -4.9999E-03 | -1.3483E-05 | -4.4643E-06 |
| 13 | 9.4252E-03 | -4.4330E-04 | -2.0290E-05 | -2.1317E-06 |
| 14 | -1.1806E-03 | 2.5002E-04 | -3.1902E-05 | 1.8660E-06 |

Table 32 shows an effective focal length f, number of apertures, total field of view, half of the diagonal length of the effective pixel area on the imaging surface of the imaging lens (ih), total optical length (TTL), effective focal lengths fG1, fG2, fG3 of the first lens group 801 to the third lens group 803, an effective focal length f7 of the seventh lens 87, a distance D2_3 between the second lens group 802 and the third lens group 803, a distance DL6_7 between the sixth lens 86 and the seventh lens 87, central thicknesses T60 and T70 of the sixth lens 86 and the seventh lens 87 on the optical axis, and thicknesses T6max and T7max from the frontmost point to the rearmost point in an optical effective portion of the imaging lens 8 according to the Numerical Example 8.

[Table 32]

| | |
|---|---|
| f(mm) | 4.667 |
| F-number | 1.90 |
| total field of view (°) | 80.5 |
| ih (mm) | 4.000 |
| TTL (mm) | 5.676 |
| fG1(mm) | 5.490 |
| fG2(mm) | 6.694 |
| fG3(mm) | -3.418 |
| fL7(mm) | -8.138 |
| DB2_3(=D11)(mm) | 0.839 |
| DL6_7(=D13)(mm) | 0.300 |
| T60(=D12)(mm) | 0.327 |
| T6max(mm) | 1.686 |
| T70(=D14+D15)(mm) | 0.325 |
| T7max(mm) | 0.412 |

It can be seen from Table 32 that, in the Numerical Example 8, TTL/2ih=0.71, thus the condition (1) is satisfied.
In addition, it can be seen from Table 32 that, in the Numerical Example 8, ih/f=0.86, thus the condition (2) is satisfied.

In addition, it can be seen from Table 32 that, in the Numerical Example 8, fG1/fG2=0.82, thus the condition (3) is satisfied.

In addition, it can be seen from Table 32 that, in the Numerical Example 8, fG3/fL7=0.42, thus the condition (4) is satisfied.

In addition, it can be seen from Table 32 that, in the Numerical Example 8, (DB2_3-DL6_7)/ih=0.13, thus the condition (5) is satisfied.

In addition, it can be seen from Table 32 that, in the Numerical Example 8, (T7max-T70)/(T6max-T60)=0.06, thus the condition (6) is satisfied.

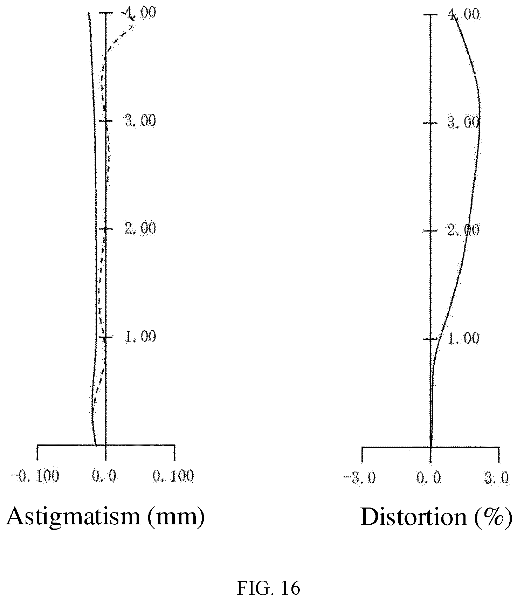

FIG. 16 is an aberration diagram at infinity focus according to the Numerical Example 8.

An astigmatism diagram and a distortion diagram are shown in FIG. 16.

In the astigmatism diagram, values in a sagittal image plane are indicated with a solid line, and values in a meridional image plane are indicated with a broken line.

It can be seen from the aberration diagram that, in the Numerical Example 8, various aberrations are well corrected, and the imaging performance is excellent.

An imaging device according to the present disclosure includes the imaging lens according to the present disclosure and an imaging element that converts an optical image imaged by the aforementioned imaging lens into an electrical signal.

That is, in the imaging device according to the present disclosure, the imaging element includes a first lens group, a second lens group, and a third lens group, which are successively arranged in order from an object side to an image side. The first lens group includes a first lens that is aspheric and has a positive refractive power on an optical axis, a second lens that is aspheric, and a third lens that is aspheric, and the first lens group has a positive composite refractive power. The second lens group includes a fourth lens that is aspheric and a fifth lens that is aspheric, and the second lens group has a positive composite refractive power. The third lens group includes a sixth lens that with a negative refractive power on the optical axis, and a seventh lens that is aspheric, and the third lens group has a negative composite refractive power.

That is, in the imaging device according to the present disclosure, the imaging lens is configured such that among configurations of the seven lenses, at least the first lens has a positive refractive power, and at least the sixth lens has a negative refractive power.

In addition, in the imaging device according to the present disclosure, the imaging lens satisfies the following conditions (1) to (6).

$$(1)\ 0.51 < TTL/2ih < 0.85;$$

$$(2)\ 0.69 < ih/f < 1.03;$$

$$(3)\ 0.03 < (T7max-T70)/(T6max-T60) < 0.31.$$

where TTL is a distance from an object side surface of the first lens to an imaging surface along the optical axis;
ih is half of a diagonal length of an effective pixel area on the imaging surface;
f is an effective focal length of the imaging lens;
T60 is a center thickness of the sixth lens on the optical axis;
T6max is thickness of an optical effective portion of the sixth lens from a portion closest to the object side to a portion closest to the image side in a direction parallel to the optical axis;
T70 is a center thickness of the seventh lens on the optical axis; and
T7max is a thickness of an optical effective portion of the seventh lens from a portion closest to the object side to a portion closest to the image side in a direction parallel to the optical axis.

The imaging lens may further satisfy condition (4):

$$(4)\ 0.03 < fG1/fG2 < 33.3,$$

where fG1 is an effective focal length of the first lens group;

fG2 is an effective focal length of the second lens group.

The imaging lens may further satisfy condition (5):

$$(5)\ -0.11 < fG3/fL7 < 0.95,$$

where fG3 is an effective focal length of the third lens group;
fL7 is an effective focal length of the seventh lens.

The imaging lens may further satisfy condition (6):

$$-0.11 < (DB2\_3\text{-}DL6\_7)/ih < 0.34,$$

where DB2_3 is a distance between the second lens group and the third lens group on the optical axis;
DL6_7 is a distance between the sixth lens and the seventh lens on the optical axis.

The condition (1) relates to a total length with respect to an image height. If the total length is lower than the lower limit, it is difficult to achieve good aberration correction with a large aperture, which is an object of the present disclosure. In the condition (1), the lower limit may be 0.57, more specifically 0.64. If the total length exceeds the upper limit in the condition (1), the miniaturization that is an object of the present disclosure cannot be achieved. In the condition (1), the upper limit may be 0.79 to achieve further miniaturization, and the upper limit may more specifically be 0.74.

If the effective focal length and an image height involved in the condition (2) is lower than the lower limit, the image height will become smaller with respect to the effective focal length, and a large field of view that is an object of the present disclosure cannot be achieved. In the condition (2), the lower limit may be 0.74, such that a further large field of view can be realized. In the condition (2), the lower limit may more specifically be 0.79. If the upper limit in the condition (2) is exceeded, the field of view will become too large, and high performance achieved by performing aberration correction well, which is an object of the present disclosure, cannot be achieved. In the condition (2), the upper limit may be 0.96, more specifically 0.89.

The condition (3) relates to a thickness difference of the sixth lens and a thickness difference of the seventh lens. If the thickness difference of the seventh lens is too small to be lower than the lower limit, an aberration correction effect of the seventh lens will become small, and it is difficult for the entire lens to correct curvature of field and distortion well. In the condition (3), if the thickness difference of the sixth lens is too small to exceed the upper limit, an aberration correction effect of the sixth lens will become small, and it is difficult for the entire lens to correct curvature of field and distortion well. In the condition (3), the upper limit is preferred 0.21.

The condition (4) relates to a ratio of an effective focal length of the first lens group to an effective focal length of the second lens group. If it is lower than the lower limit, the positive refractive power of the second lens group will be weakened, and thus the second lens group can no longer share the positive refractive power with the first lens group to correct spherical aberration and coma aberration. In the condition (4), the lower limit may be 0.09, more specifically 0.27. If the upper limit in the condition (4) is exceeded, the positive refractive power of the first lens group will be weakened, and thus the first lens group can no longer share the positive refractive power with the second lens group to correct spherical aberration and coma aberration. In the condition (4), the upper limit may be 11.1, and more specifically 3.7.

The condition (5) relates to a ratio of the effective focal length of the third lens group to the effective focal length of the seventh lens. If it is lower than the lower limit, the seventh lens will become a lens with a strong positive refractive power, and it is difficult to shorten the total length. In the condition (5), if the lower limit is 0.00, the positive refractive power of the seventh lens disappears, which is beneficial to shorten the total length. In the condition (5), if the lower limit is 0.08, the seventh lens will have a negative refractive power, which is beneficial to shorten the overall length. If the upper limit in the condition (5) is exceeded, the negative refractive power of the seventh lens will become stronger. If the seventh lens is not thick enough, the seventh lens cannot be configured. Therefore, it is difficult to shorten the total length, and aberration variation resulting from the changing in the air spacing distance in front of the seventh lens increases, which are undesirable. In the condition (5), the upper limit may be 0.73, and more specifically 0.56.

The condition (6) relates to the distance between the second lens group and the third lens group and the distance between the sixth lens and the seventh lens. If it is lower than the lower limit, the distance between the second lens group with a positive refractive power and the third lens group with a negative refractive power will become smaller, and thus it is difficult to shorten the total length. In the condition (6), if the lower limit is -0.06, and more specifically -0.01, it is beneficial to shorten the total length. In the condition (6), if the upper limit is exceeded, the distance between the second lens group and the third lens group will become too large, making it difficult to shorten the total length. In the condition (6), the upper limit may be 0.27.

In the imaging device according to the present disclosure, the refractive power on the optical axis of the second lens may be negative, or the refractive power on the optical axis of the second lens may be positive and the refractive power on the optical axis of the third lens is negative.

In addition, in the imaging device according to the present disclosure, it is preferable that the distances between the lenses in the third lens group changes during focusing. In particular, if lenses other than the seventh lens are configured to move integrally, the configuration for focusing is simplified, and the moving distance of the lenses due to focusing is shortened.

In addition, in the imaging device according to the present disclosure, it is preferable that the seventh lens functions as an infrared cut filter.

In a conventional imaging device, an infrared cut filter is provided between an imaging lens and an imaging surface. Therefore, in a conventional imaging lens, a long back focal length is required, which impedes the miniaturization of the imaging lens. In contrast, in an imaging lens with the seventh lens functioning as an infrared cut filter, a design with a short back focal length can be adopted, which can achieve miniaturization.

When the seventh lens functions as the infrared cut filter, the seventh lens may function as an infrared cut filter, due to the material thereof, or due to that an infrared cut layer is disposed on a minimum curvature surface having smaller curvature than that of any other lens surfaces.

When the seventh lens functions as the infrared cut filter due to the material thereof, the uniformity of the infrared cut effect in a direction perpendicular to the optical axis is high. In addition, when the seventh lens functions as the infrared cut filter due to the infrared cut layer, it is excellent in terms of ease of manufacture, freedom of selection of the infrared cut layer, and the like.

In addition, in an imaging lens according to one embodiment of the present disclosure, it is preferable that the seventh lens is a composite lens formed by a substrate portion made of glass and an aspheric lens portion made of resin. If the seventh lens is such a composite lens, the substrate portion and the aspheric lens portion can share the function of maintaining the strength of the lens, the function as a filter etc., and the function of the correction optical system that achieves high performance in aberration and imaging performance.

As light transmission characteristics of the infrared cut filter, the following characteristics are preferable: the transmittance is half (50%) at any wavelength in a wavelength range of 380nm to 430nm, and the transmittance is 80% or more in a wavelength range of 500nm to 600nm, and the transmittance is 10% or less in a wavelength range of 730nm to 800nm.

Specifically, it is preferable that the aforementioned infrared cut filter is constituted by a multilayer film formed by blue glass, a multilayer film formed by ink, a multilayer film formed by vacuum vapor deposition or the like or a combination thereof.

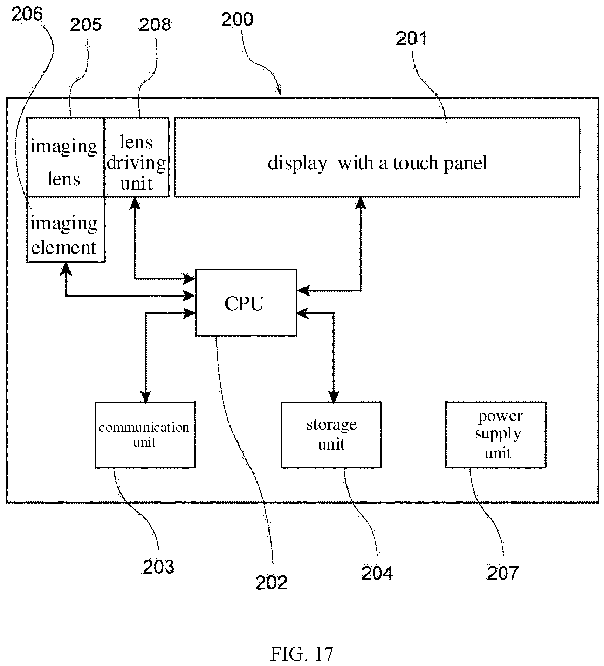

FIG. 17 is a block diagram of an information terminal according to an embodiment of the present disclosure.

As an example of the information terminal, a smartphone 200 includes: a display 201 with a touch panel that functions as a display unit and an input unit; a CPU (central processing unit) 202 that performs input and output of information via the display 201 with a touch panel, various information processing, control processing and the like; a communication unit 203 that performs telephone communication, Wi-Fi communication and the like according to a control of the CPU 202; a storage unit 204 that stores various information; an imaging lens 205 that apply the imaging lens 1, ..., 8 according to embodiments as described above; an imaging element (image sensor) 206 that converts an optical image imaged by the imaging lens 205 into an electrical signal; a power supply unit 207 that supplies power to each unit of the smartphone 200; and a lens driving unit 208 that drives the imaging lens 205. The combination of the imaging lens 205, the imaging element (image sensor) 206, and the lens driving unit 208 corresponds to an embodiment of the imaging device of the present disclosure.

The electrical signal obtained by converting the optical image by the imaging element 206 is acquired into the CPU 202 as image data and is subjected to various signal processing and image processing. The CPU 202 corresponds to an example of the processing element referred to in the present disclosure. In addition, according to user instruction received via the display 201 with the touch panel, the image data is displayed as an image on the display 201 with the touch panel, or stored in the storage unit 204, or transmitted via the communication unit 203.

The lens driving unit 208 drives the first lens to the sixth lens in the imaging lens 205 as an integrated driving group, and moves them with respect to the seventh lens. The lens driving unit 208 can drive the driving group in a direction along the optical axis and a direction intersecting the optical axis, respectively. The lens driving unit 208 drives the drive group according to the control of the CPU 202, and realizes focusing according to the movement of the drive group driven in the direction along the optical axis.

In addition, based on the movement of the drive group driven in the direction intersecting the optical axis, optical image stabilization is realized.

In addition, in the above description, a smartphone is exemplified as an embodiment of the information terminal of the present disclosure. However, the information terminal of the present disclosure may be other electronic devices, such as a tablet computer, a notebook computer, a personal digital assistant, a smart watch and the like.

In addition, in the above description, as an embodiment of the imaging device of the present disclosure, a device incorporated in a smartphone is exemplified, but the imaging device of the present disclosure may also be a digital camera or the like.

Although the respective embodiments have been described one by one, it shall be appreciated that the respective embodiments will not be isolated. Those skilled in the art can apparently appreciate upon reading the disclosure of this application that the respective technical features involved in the respective embodiments can be combined arbitrarily between the respective embodiments as long as they have no collision with each other. Of course, the respective technical features mentioned in the same embodiment can also be combined arbitrarily as long as they have no collision with each other.

**Claims**

1. An imaging lens (1, 2, 3, 4, 5, 6, 7, 8) comprising, successively in order from an object side to an image side:

   a first lens group (101, 201, 301, 401, 501, 601, 701, 801) comprising a first lens (11, 21, 31, 41, 51, 61, 71, 81) that is aspheric and has a positive refractive power on an optical axis, a second lens (12, 22, 32, 42, 52, 62, 72, 82) that is aspheric, and a third lens (13, 23, 33, 43, 53, 63, 73, 83) that is aspheric, the first lens group (101, 201, 301, 401, 501, 601, 701, 801) having a positive composite refractive power,
   a second lens group (102, 202, 302, 402, 502, 602, 702, 802) comprising a fourth lens (14, 24, 34, 44, 54, 64, 74, 84) that is aspheric and a fifth lens (15, 25, 35, 45, 55, 65, 75, 85) that is aspheric, and the second lens group (102, 202, 302, 402, 502, 602, 702, 802) having a positive composite refractive power, and
   a third lens group (103, 203, 303, 403, 503, 603, 703, 803) comprising a sixth lens (16, 26, 36, 46, 56, 66, 76, 86) that is aspheric and has a negative refractive power on the optical axis and a seventh lens (17, 27, 37, 47, 57, 67, 77, 87) that is aspheric, and the third lens group (103, 203, 303, 403, 503, 603, 703, 803) having a negative composite refractive power;
   wherein the imaging lens (1, 2, 3, 4, 5, 6, 7, 8) satisfies the following conditions (1) to (3):

   $$(1)\ 0.51 < TTL/2ih < 0.85;$$

   $$(2)\ 0.69 < ih/f < 1.03;$$

   $$(3)\ 0.03 < (T7max-T70)/(T6max-T60) < 0.31;$$

   wherein TTL is a distance from an object side surface of the first lens (11, 21, 31, 41, 51, 61, 71, 81) to an imaging surface along the optical axis;
   ih is half of a diagonal length of an effective pixel area on the imaging surface;
   f is an effective focal length of the imaging lens (1, 2, 3, 4, 5, 6, 7, 8);
   T60 is a center thickness of the sixth lens (16, 26, 36, 46, 56, 66, 76, 86) on the optical axis;
   T6max is a thickness of an optical effective portion of the sixth lens (16, 26, 36, 46, 56, 66, 76, 86) from a portion closest to the object side to a portion closest to the image side in a direction parallel to the optical axis;
   T70 is a center thickness of the seventh lens (17, 27, 37, 47, 57, 67, 77, 87) on the optical axis; and
   T7max is a thickness of an optical effective portion of the seventh lens (17, 27, 37, 47, 57, 67, 77, 87) from a portion closest to the object side to a portion closest to the image side in the direction parallel to the optical axis.

2. The imaging lens (1, 2, 3, 4, 5, 6, 7, 8) according to claim 1, wherein the imaging lens (1, 2, 3, 4, 5, 6, 7, 8) further satisfies the following condition (4):

   $$(4)\ 0.03 < fG1/fG2 < 33.3;$$

wherein fG1 is an effective focal length of the first lens group (101, 201, 301, 401, 501, 601, 701, 801);
fG2 is an effective focal length of the second lens group (102, 202, 302, 402, 502, 602, 702, 802).

3. The imaging lens (1, 2, 3, 4, 5, 6, 7, 8) according to claim 1, wherein the imaging lens (1, 2, 3, 4, 5, 6, 7, 8) further satisfies the following condition (5):

$$(5) \ -0.11 < fG3/fL7 < 0.95;$$

wherein fG3 is an effective focal length of the third lens group (103, 203, 303, 403, 503, 603, 703, 803);
fL7 is an effective focal length of the seventh lens (17, 27, 37, 47, 57, 67, 77, 87).

4. The imaging lens (1, 2, 3, 4, 5, 6, 7, 8) according to claim 1, wherein the imaging lens (1, 2, 3, 4, 5, 6, 7, 8) further satisfies the following condition (6):

$$(6) \ -0.11 < (DB2\_3 - DL6\_7)/ih < 0.34;$$

wherein DB2_3 is a distance between the second lens group (102, 202, 302, 402, 502, 602, 702, 802) and the third lens group (103, 203, 303, 403, 503, 603, 703, 803) on the optical axis;
DL6_7 is a distance between the sixth lens (16, 26, 36, 46, 56, 66, 76, 86) and the seventh lens (17, 27, 37, 47, 57, 67, 77, 87) on the optical axis.

5. The imaging lens (1, 2, 3, 4, 5, 6, 7, 8) according to claim 1, wherein the second lens (12, 22, 32, 42, 52, 62, 72, 82) has a negative refractive power on the optical axis.

6. The imaging lens (1, 2, 3, 4, 5, 6, 7, 8) according to claim 1, wherein the second lens (12, 22, 32, 42, 52, 62, 72, 82) has a positive refractive power on the optical axis, and the third lens (13, 23, 33, 43, 53, 63, 73, 83) has a negative refractive power on the optical axis.

7. The imaging lens (1, 2, 3, 4, 5, 6, 7, 8) according to claim 1, wherein distances between lenses in the third lens group (103, 203, 303, 403, 503, 603, 703, 803) changes during focusing.

8. The imaging lens (1, 2, 3, 4, 5, 6, 7, 8) according to claim 1, wherein the seventh lens (17, 27, 37, 47, 57, 67, 77, 87) functions as an infrared cut filter due to a material thereof.

9. The imaging lens (1, 2, 3, 4, 5, 6, 7, 8) according to claim 1, wherein one of the object side surface and the image side surface of the seventh lens (17, 27, 37, 47, 57, 67, 77, 87) is a surface with minimum curvature, an infrared cut layer (173, 273, 373, 473, 573, 673, 773, 873) is disposed on the surface with minimum curvature, such that the seventh lens (17, 27, 37, 47, 57, 67, 77, 87) functions as an infrared cut filter.

10. The imaging lens (1, 2, 3, 4, 5, 6, 7, 8) according to claim 1, wherein the seventh lens (17, 27, 37, 47, 57, 67, 77, 87) is a composite lens formed by a substrate portion (171, 271, 371, 471, 571, 671, 871) made of glass and an aspherical lens portion (172, 272, 372, 472, 572, 672, 772, 872) made of resin.

11. An imaging device, comprising:

the imaging lens (1, 2, 3, 4, 5, 6, 7, 8) according to claim 1 ; and
an imaging element (206) configured to convert an optical image imaged by the imaging lens (1, 2, 3, 4, 5, 6, 7, 8) into an electrical signal.

12. An information terminal (200), comprising:

the imaging device according to claim 11; and
a processing element configured to process the electrical signal obtained by the imaging device.

FIG.1

Astigmatism (mm)          Distortion (%)

FIG. 2

FIG. 3

Astigmatism (mm)

Distortion (%)

FIG. 4

FIG. 5

Astigmatism (mm)

Distortion (%)

FIG. 6

FIG. 7

Astigmatism (mm)

Distortion (%)

FIG. 8

FIG. 9

Astigmatism (mm)         Distortion (%)

FIG. 10

FIG. 11

Astigmatism (mm)

Distortion (%)

FIG. 12

FIG. 13

Astigmatism (mm)          Distortion (%)

FIG. 14

FIG. 15

Astigmatism (mm)

Distortion (%)

FIG. 16

FIG. 17

| | Europäisches Patentamt<br>European Patent Office<br>Office européen des brevets | **EUROPEAN SEARCH REPORT** | **Application Number**<br>EP 20 19 0105 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/219798 A1 (PARK IL YONG [KR]) 3 August 2017 (2017-08-03) * examples 1,4 * | 1-12 | INV.<br>G02B9/64<br>G02B13/00<br>G02B13/04 |
| X | EP 3 451 038 A1 (NANCHANG O FILM OPTICAL ELECTRONIC TECH CO LTD [CN]) 6 March 2019 (2019-03-06) * paragraphs [0016], [0030]-[0034]; example 5 * | 1-12 | |
| X | JP 2013 182090 A (KONICA MINOLTA INC) 12 September 2013 (2013-09-12) * paragraphs [0015], [0039], [0072]; figure 4; example 1 * | 1-12 | |
| A | US 2014/098239 A1 (JEONG HYEJUNG [KR]) 10 April 2014 (2014-04-10) * paragraph [0036] - paragraph [0037]; figures 1,2,3 * | 1-12 | |
| A | US 2017/059828 A1 (SEKINE YUKIO [JP] ET AL) 2 March 2017 (2017-03-02) * conditional expressions 17b, 18b * | 1-12 | TECHNICAL FIELDS SEARCHED (IPC)<br><br>G02B |
| A | US 2015/124333 A1 (NODA TAKAYUKI [JP] ET AL) 7 May 2015 (2015-05-07) * paragraph [0057] - paragraph [0058] * | 1-12 | |
| A | Herbert Gross ET AL: "Handbook of Optical Systems, Vol.3: Aberration Theory and Correction of Optical Systems" In: "Handbook of optical systems, Aberration theory and correction of optical systems", 1 January 2007 (2007-01-01), Wiley-VCH, Weinheim, DE, XP055258161, ISBN: 978-3-527-40379-0 pages 377-379, * the whole document * | 1 | |

The present search report has been drawn up for all claims

| Place of search | Date of completion of the search | Examiner |
|---|---|---|
| Munich | 28 October 2020 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 0105

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2020

| Patent document cited in search report | | Publication date | Patent family member(s) | | Publication date |
|---|---|---|---|---|---|
| US 2017219798 | A1 | 03-08-2017 | CN 107015343 A<br>CN 110286466 A<br>KR 20170090204 A<br>US 2017219798 A1<br>US 2018284391 A1<br>US 2020003994 A1 | | 04-08-2017<br>27-09-2019<br>07-08-2017<br>03-08-2017<br>04-10-2018<br>02-01-2020 |
| EP 3451038 | A1 | 06-03-2019 | CN 109425966 A<br>EP 3451038 A1<br>JP 2019045654 A<br>KR 20190024732 A<br>TW 201913168 A<br>US 2019064485 A1 | | 05-03-2019<br>06-03-2019<br>22-03-2019<br>08-03-2019<br>01-04-2019<br>28-02-2019 |
| JP 2013182090 | A | 12-09-2013 | NONE | | |
| US 2014098239 | A1 | 10-04-2014 | CN 103597395 A<br>EP 2718761 A2<br>KR 20120135648 A<br>US 2014098239 A1<br>WO 2012169778 A2 | | 19-02-2014<br>16-04-2014<br>17-12-2012<br>10-04-2014<br>13-12-2012 |
| US 2017059828 | A1 | 02-03-2017 | CN 106483637 A<br>CN 206178230 U<br>JP 6573315 B2<br>JP 2017049329 A<br>US 2017059828 A1<br>US 2019170981 A1<br>US 2019170982 A1 | | 08-03-2017<br>17-05-2017<br>11-09-2019<br>09-03-2017<br>02-03-2017<br>06-06-2019<br>06-06-2019 |
| US 2015124333 | A1 | 07-05-2015 | CN 204422844 U<br>JP 5752856 B2<br>JP WO2014013677 A1<br>TW M471595 U<br>US 2015124333 A1<br>WO 2014013677 A1 | | 24-06-2015<br>22-07-2015<br>30-06-2016<br>01-02-2014<br>07-05-2015<br>23-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016018001 A

- JP 2015007748 A